(19) Europäisches Patentamt
European Patent Office
Office européen des brevets

(11) **EP 2 219 918 B1**

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: 08856683.1

(22) Anmeldetag: **27.11.2008**

(51) Int Cl.:
*B60T 17/08* *(2006.01)*          *F16D 55/224* *(2006.01)*
*F16D 65/14* *(2006.01)*

(86) Internationale Anmeldenummer:
**PCT/EP2008/010052**

(87) Internationale Veröffentlichungsnummer:
**WO 2009/071229 (11.06.2009 Gazette 2009/24)**

(54) **KOMBIZYLINDER MIT KRAFTÜBERSETZENDEM GETRIEBE MIT VERÄNDERLICHER ÜBERSETZUNG**

COMBINATION CYLINDER WITH POWER-TRANSMITTING TRANSMISSION HAVING VARIABLE GEAR RATIO

CYLINDRE COMBINÉ AVEC TRANSMISSION DÉMULTIPLICATRICE À DÉMULTIPLICATION VARIABLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.12.2007 DE 102007058670**

(43) Veröffentlichungstag der Anmeldung:
**25.08.2010 Patentblatt 2010/34**

(60) Teilanmeldung:
**10005591.2**

(73) Patentinhaber: **KNORR-BREMSE Systeme für Schienenfahrzeuge GmbH
80809 München (DE)**

(72) Erfinder:
• **KRAUS, Harry-Werner
81825 München (DE)**
• **OSTLER, Armin
80469 München (DE)**
• **FUDERER, Erich
82256 Fürstenfeldbruck (DE)**
• **MATHIEU, Michael
82178 Puchheim (DE)**
• **EBNER, Christian
86161 Augsburg (DE)**

(74) Vertreter: **Mattusch, Gundula
C/o Knorr-Bremse AG
Moosacherstrasse 80
80809 München (DE)**

(56) Entgegenhaltungen:
**EP-A- 0 146 750          EP-A- 0 553 450
EP-A- 0 738 643          FR-A- 2 757 122**

EP 2 219 918 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft einen Kombizylinder beinhaltend einen Betriebsbremszylinder als aktive Betriebsbremse mit wenigstens einem druckmittelbetätigten Betriebsbremskolben, welcher über eine Betriebsbremskolbenstange einen Bremsmechanismus betätigt, sowie einen Federspeicherbremszylinder als passive Feststellbremse mit einem gegen die Wirkung wenigstens einer Speicherfeder druckmittelbetätigten Federspeicherbremskolben, wobei der Federspeicherbremskolben im Feststellbremsfall die Kraft der wenigstens einen Speicherfeder mittels eines kraftübersetzenden Getriebes auf die Betriebsbremskolbenstange überträgt, nach dem Oberbegriff von Anspruch 1.

In heutigen Schienenfahrzeugen sind die Platzverhältnisse in den Drehgestellen sehr beengt. Insbesondere in Drehgestellen von Hochgeschwindigkeitszügen müssen bis zu vier Bremsscheiben auf einer Achse angeordnet werden. Weiterhin ist der Bauraum für die Bremsen durch Antriebsaggregate oder Spurstangen von Magnetschienenbremsen oft eingeschränkt. Diese Probleme treten besonders dann zutage, wenn sog. Kombizylinder, in welchen ein druckmittelbetätigter Betriebsbremszylinder als Betriebsbremse und ein Federspeicherbremszylinder als passive Feststellbremse aneinander geflanscht sind, als Drehgestellbremsen verwendet werden, weil solche Kombizylinder relativ viel Bauraum beanspruchen und größer bauen als Betriebsbremszylinder ohne Federspeicherbremszylinder. Unter einer aktiven Bremse wird im allgemeinen eine Brems verstanden, welche bei Druckbeauschlagung zuspannt und bei einer Druckverringerung löst. Dies ist in den meisten Fällen die Betriebsbremse. Bei einer passiven Bremse wie einer Federspeicherbremse als Feststellbremse wird hingegen die Bremskraft durch die Speicherfeder erzeugt, wobei bei Druckbeaufschlagung des Federspeicherbremszylinders dieser gegen die Wirkung der Speicherfeder in Bremslösestellung gedrängt und bei einer Druckverringerung durch die Wirkung der Speicherfeder in Zuspannstellung gebracht wird.

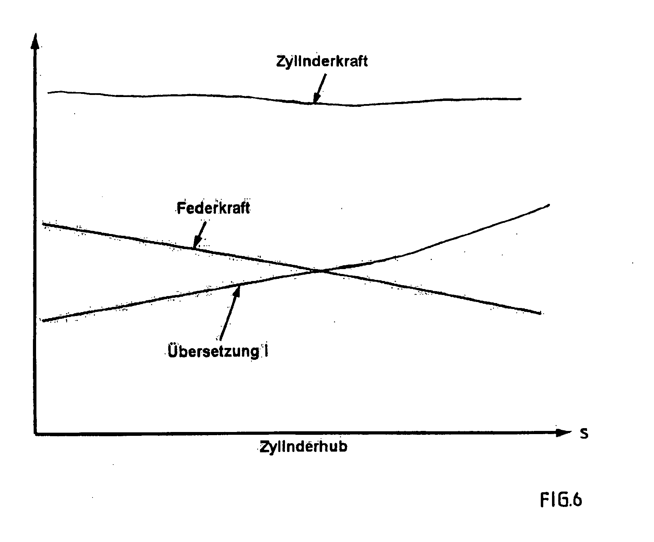

Die erforderliche Anzahl von Feststellbremsen im Drehgestell hängt von der zur Verfügung stehenden Kraft der Federspeicherbremszylinder und damit von der Kraft der Speicherfedern ab. Große Feststellkräfte erfordern jedoch relativ groß dimensionierte Speicherfedern, was im Widerspruch zu möglichst kleinen Kombizylindern steht. Weiterhin sind solche Kombizylinder bei Schienenfahrzeugen meist als Bremsaktuator in Bremszangen eingebaut, welche eine relativ geringe Zangenübersetzung aufweisen. Außerdem besteht das Problem, dass sich aufgrund der Charakteristik der Kennlinie, welche die Abhängigkeit der Federkraft der Speicherfeder vom Hub des Federspeicherkolbens beschreibt, die Federkraft mit steigendem Hub des Federspeicherkolbens abnimmt und somit im zugespannten Zustand nur noch ein relativ geringer Anteil der Speicherfederkraft auf die Bremsscheibe wirkt. Dieser Sachverhalt wird durch die Kurve von Fig.6 veranschaulicht, welche unter anderem die Abhängigkeit der Federkraft der Speicherfeder vom Hub s des Federspeicherbremskolbens zeigt.

Ein gattungsgemäßer Kombizylinder ist aus der EP 0553 450 B1 bekannt. Bei diesem in einer Bremszange einer Scheibenbremse eines Schienenfahrzeugs verbauten Kombizylinder ist der Federspeicherbremszylinder vertikal angeordnet und überträgt die Kraft der Speicherfeder mittels eines Kurvengetriebes in Form eines Keilstücks auf die Betriebsbremskolbenstange, welche demgegenüber horizontal bzw. senkrecht angeordnet ist. Der Abrollabschnitt des Keilstücks, an welchem ein mit der Betriebsbremskolbenstange gekoppelter Druckstößel abrollt, ist linear ausgebildet, so dass die Kraftübersetzung konstant und dann infolge der abnehmenden Federkraft über dem Hub des Federspeicherkolbens die abgegebene Kraft der Federspeicherparkbremse abnimmt. Weiterhin bedingt die senkrechte Anordnung des Federspeicherbremszylinders in Bezug zum Betriebsbremszylinder einen relativ großen Bauraum, weil sich der Kombizylinder in zwei Richtungen erstreckt.

Es ist daher Aufgabe der vorliegenden Erfindung, einen Kombizylinder der eingangs erwähnten Art derart weiterzubilden, dass er kompakter baut und bei kleinem Bauraum eine möglichst große Feststellbremskraft zur Verfügung stellt.

Diese Aufgabe wird durch die Merkmale von Anspruch 1 gelöst.

Offenbarung der Erfindung

Die Erfindung schlägt vor, das Getriebe derart auszubilden, dass die Bewegungen des Federspeicherbremskolbens und der Betriebsbremskolbenstange koaxial sind und die Kraftübersetzung mit steigendem Hub des Federspeicherbremskolbens größer wird. Aufgrund der ersten Maßnahme nimmt die vertikale Erstreckung des Kombizylinders ab, weil der Betriebsbremszylinder und der Federspeicherbremszylinder koaxial aneinander geflanscht werden können. Dies ist insofern günstig als insbesondere der vertikale Bauraum in Drehgestellen stark eingeschränkt und noch eher Platz in horizontaler Richtung vorhanden ist.

Die zweite Maßnahme bedingt eine Kraftzunahme mit steigendem Hub des Federspeicherbremskolbens, was zu einer vorteilhaft hohen Feststellbremskraft in der Endlage des Federspeicherbremskolbens und damit im zugespannten Zustand der Federspeicherbremse führt. Dann wird die mit dem Hub des Federspeicherkolbens an sich sinkende Speicherfederkraft durch die steigende Kraftübersetzung des Getriebes kompensiert. Bei geeigneter Auslegung des Getriebes kann eine annährend konstante und hohe Speicherfederkraft an der Betriebskolbenstange über dem gesamten Hub des Federspeicherkolbens realisiert werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist ein drehfest gelagerter, koaxial zu einer Mittelachse des Kombizylinders betätigbarer Druckring vorgesehen, welcher Axialkräfte auf einen Spindeltrieb ausübt, dessen einer Teil drehfest und dessen anderer Teil koaxial zur Mittelachse drehbar gelagert ist, wobei die Drehbewegung des drehbaren Teils des Spindeltriebs mittels einer lösbaren Drehsperre zur Axialkraftübertragung zwischen dem drehfesten Teil und dem drehbaren Teil sperrbar und zur Aufhebung dieser Axialkraftübertragung entsperrbar ist. Das Gewinde ist bevorzugt ein nicht-selbsthemmendes Gewinde, wobei die lösbare Drehsperreinrichtung von einer Notlöseeinrichtung zum Notlösen des Federspeicherbremszylinders umfasst ist. Weiterhin ist eine Axialkraftübertragung zwischen dem Spindeltrieb und der Betriebsbremskolbenstange vorgesehen.

Unter Notlösen wird ein mechanisches Lösen der Federspeicherbremse verstanden, wenn die Druckluftversorgung gestört ist und folglich der Federspeicherbremskolben nicht mehr durch Druckmittelbetätigung in die gelöste Stellung verfahren werden kann.

Gemäß einer ersten Variante des erfindungsgemäßen Kombizylinders gemäß Patentanspruch 7 sind der Druckring und der drehfeste Teil des Spindeltriebs zusammengefasst und die Drehsperre ist zwischen dem Druckring und dem drehbaren Teil des Spindeltriebs angeordnet.

Gemäß einer Weiterbildung dieser Variante ist an dem Druckring wenigstens ein senkrecht zur Mittelachse des Kombizylinders angeordneter Lagerzapfen ausgebildet, an dem wenigstens ein Winkelhebel schwenkbar gelagert ist, der mit seinem einen Hebelarm am Federspeicherbremskolben angelenkt und mit seinem anderen Hebelarm an einer festen Stützfläche des Kombizylinders derart abgestützt ist, dass bei einer Betätigung des Federspeicherbremskolbens im Festbremsfall eine Drehung des abgestützten Winkelhebels um den Lagerzapfen und damit eine gleichgerichtete Betätigung des Druckrings ausgelöst wird. Ein solcher Winkelhebel bildet dann ein Hebelgetriebe aus, wobei sich die jeweilige Übersetzung aus der momentanen Lage des Winkelhebels bzw. der Hebelarme des Winkelhebels ergibt.

Die im Feststellbremsfall vom Federspeicherbremskolben erzeugte Feststellbremskraft wird folglich über den Winkelhebel als Getriebe in den Druckring eingeleitet und dadurch verstärkt. Vom Druckring wird diese verstärkte Kraft über das sperrbare Gewinde in den Spindeltrieb und von dort über das Drucklager in das Betriebsbremskolbenrohr und schließlich in ein Spindeljoch eingeleitet, dessen Hub letztlich diese verstärkte Kraft in einen Bremsmechanismus einleitet, vorzugsweise in eine Bremszange einer Scheibenbremse eines Schienenfahrzeugs.

Wenn nun zwei an sich senkrecht zur Mittelachse des Kombizylinders nach außen erstreckenden Lagerzapfen des Druckrings drehbar gelagerte Winkelhebel vorgesehen sind, welche in Bezug zu einer die Mittelachse des Kombizylinders enthaltenden Ebene zueinander umgeschlagen angeordnet sind (d.h. die Lage des einen Winkelhebels ergibt sich aus einer Drehung des anderen Winkelhebels um 180 Grad um die Mittelachse, punktsymmetrische Anordnung), so heben sich die Reaktionsmomente, welche von dem als Hebel wirkenden Abstand der Winkelhebel von der Mittelachse herrühren, auf, so dass in vorteilhafter Weise kein Drehmoment auf den Druckring bzw. auf den Federspeicherbremskolben um eine Achse senkrecht zur Mittelachse (Kippmoment) wirkt.

Vorzugsweise ist jeweils ein Hebelarm eines Winkelhebels mittels einer doppelt angelenkten Zuglasche mit dem Federspeicherbremskolben verbunden und je ein anderer Hebelarm eines Winkelhebels mittels einer auf der festen Stützfläche abrollbaren Stützrolle abgestützt, wodurch der Verschleiß minimiert wird.

Um den Druckring im Kombizylinder definiert drehfest, aber axial beweglich zu führend, tragen die Lagerzapfen des Druckrings endseitig Gleitkörper, welche in sich in Richtung der Mittelachse des Kombizylinders erstreckenden Kulissen drehfest geführt sind.

Die Stützfläche für die abrollbaren Stützrollen des anderen Arme der Winkelhebel sind bevorzugt an einer Trennwand zwischen dem Federspeicherbremszylinder und dem Betriebsbremszylinder ausgebildet, welche ohnehin vorhanden ist, so dass keine weiteren Bauteile notwendig sind. Denn diese Trennwand bildet gleichzeitig eine Stützfläche für die wenigstens eine Speicherfeder des Federspeicherbremszylinders.

Besonders bevorzugt beinhaltet die Drehsperreinrichtung eine in eine Außenverzahnung der Spindel eingreifbare, handbetätigte Sperrklinke, welche am Druckring drehbar gelagert ist.

Gemäß einer zweiten Variante des erfindungsgemäßen Kombizylinders gemäß Patentanspruch 16 ist durch den Federspeicherbremskolben wenigstens eine Keilkontur parallel zur Mittelachse des Kombizylinders betätigbar, an welcher ein Hebelarm wenigstens eines am Kombizylinder drehbar gelagerten Hebels entlang führbar ist, dessen anderer Hebelarm sich am Druckring abstützt, wobei ein Entlangführen des einen Hebelarms des Hebels an der Keilkontur eine Drehbewegung des Hebels um eine Hebeldrehachse und damit durch den anderen Hebelarm eine auf den Druckring wirkende, in Bezug zur Bewegung des Federspeicherzylinders gleich gerichtete Axialkraft hervorruft. Dabei ist beispielsweise die Hebeldrehachse des Hebels senkrecht zur Mittelachse des Kombizylinders angeordnet.

Gemäß einer Weiterbildung dieser Maßnahme sind bevorzugt zwei, den Druckring in Richtung der Drehachse des Hebels gesehen wenigstens teilweise umfassende Keilkonturen vorgesehen sind, welche mit zwei,

zur Mittelachse des Kombizylinders symmetrischen und zu einem Doppelhebel zusammengefassten Hebeln zusammen wirken. Wegen der zwei Hebel ergibt sich eine bessere Lastverteilung. Zum andern ist die Lastverteilung symmetrisch.

Besonders bevorzugt überträgt bei dieser Variante der Druckring die Axialkraft über ein Axialdrucklager auf ein das drehbares Teil des Spindeltriebs bildendes Zahnrad, in dessen Zähne eine handbetätigbare Klinke der Drehsperreinrichtung eingreifbar sind, wobei das Zahnrad auf dem drehfesten Teil des Spindeltriebs über das Gewinde drehbar gelagert ist, welches dann die Axialkraft auf die Betriebsbremskolbenstange überträgt.

Wenn sich folglich der Federspeicherbremszylinder im Festbremsfall in Zuspannrichtung bewegt, werden die beiden Keilkonturen mitbewegt, wodurch die einen Hebelarme der Drehhebel an den Keilkonturen entlangbewegt werden und damit eine Drehbewegung der Drehhebel auslösen, wodurch die anderen Hebelarme der Drehhebel den Druckring in eine in Bezug zur Bewegung des Federspeicherbremskolbens gleich gerichtete Axialbewegung versetzen. Der drehfest im Kombizylinder gelagerte Druckring überträgt dann die auf ihn wirkende Axialkraft durch das Axialdrucklager auf das drehende Teil des Spindeltriebs, welches aber im normalen Betrieb durch die Drehsperreinrichtung an der Drehung gegenüber dem drehfesten Teil des Spindeltriebs gehindert ist. Vom drehfesten Teil des Spindeltriebs wird dann die Axialkraft auf die Betriebsbremskolbenstange übertragen.

Wenn zum Notlösen der Feststellbremse die Drehsperreinrichtung dann derart betätigt wird, dass sich das drehbare Teil des Spindeltriebs gegenüber dem drehfesten Teil über das nicht selbsthemmende Getriebe frei drehen kann, verschraubt sich das drehbare Teil gegenüber dem drehfesten Teil des Spindeltriebs, bis beide Teile zueinander kraftfrei sind. Dabei bewegt sich der Federspeicherbremskolben bis zum Anschlag am Boden des Federspeicherbremszylinders.

Gemäß einer dritten Variante des erfindungsgemäßen Kombizylinders gemäß Patentanspruch 20 ist ein Kulissenmechanismus als Getriebe beinhaltend wenigstens eine am Druckring angelenkte Rollenlasche mit wenigstens einer Kulissenführung vorgesehen, in welcher wenigstens ein Kulissenhebel geführt ist, der einerseits am Gehäuse des Kombizylinders und andererseits an wenigstens einer am Federspeicherbremszylinder angelenkten Zuglasche angelenkt ist.

Die Rollenlasche ist dabei vorzugsweise an ihrem vom Druckring weg weisenden Ende mit einer drehbaren Rolle versehen, welche auf einer Kulissenfläche des Kulissenhebels abrollbar ist. Der Druckring ist beispielsweise durch wenigstens eine Gleitführung unverdrehbar im Gehäuse des Kombizylinders gelagert.

Wenn zwei Rollenlaschen mit Kulissenführungen, zwei in den Kulissenführungen geführte Kulissenhebel sowie zwei Zuglaschen vorgesehen sind, welche in Bezug zu einer die Mittelachse des Kombizylinders enthaltenden Ebene zueinander umgeschlagen angeordnet sind, dann werden von einer Betätigung des Getriebes herrührende Kippmomente kompensiert.

Wenn sich folglich der Federspeicherbremskolben im Festbremsfall in Zuspannrichtung bewegt, so stützt sich die Federkraft der Speicherfeder über die beiden Zuglaschen, die Kulissenhebel und die Rollenlaschen auf dem Druckring ab. Dieser leitet dann die Kraft auf die Betriebsbremskolbenstange und auf damit auf den Bremsmechanismus ab. Aufgrund dieser Kinematik stellt sich jeweils eine Rollenlasche automatisch auf die vom Hub des Federspeicherbremskolbens abhängige Winkellage des zugeordneten Kulissenhebels ein, denn sie nimmt die Position ein, bei der die Kraftwirkungslinie der Rollenlasche senkrecht zur Tangente der Kulissenfläche im Berührungspunkt der Stützrolle steht. Durch die kinematisch bedingte Anpassung der Lage der Rollenlaschen abhängig vom Hub des Federspeicherbremskolbens steigt die Übersetzung des dadurch gebildeten Getriebes an.

Wie bei den anderen Ausführungsbeispielen auch können durch diese Kinematik des Getriebes der Federspeicherbremszylinder und der Betriebsbremszylinder koaxial zur Mittelachse des Kombizylinders angeordnet werden, wobei die Bewegungen des Betriebsbremszylinders und des Federspeicherbremszylinders im Bremszuspann- wie im Lösefall gleichgerichtet sind.

Nicht zuletzt betrifft die Erfindung auch eine Bremszangeneinheit einer Scheibenbremse eines Schienenfahrzeugs beinhaltend einen der vorangehend beschriebenen Kombizylinder.

Genaueres wird im Rahmen der folgenden Beschreibung von Ausführungsbeispielen der Erfindung deutlich.

Zeichnung

Ausführungsbeispiele der Erfindung sind in der Zeichnung dargestellt und in der nachfolgenden Beschreibung näher erläutert. In der Zeichnung zeigt

Fig.1    eine Draufsicht einer Bremszangeneinheit eines Schienenfahrzeugs mit einem Kombizylinder gemäß der Erfindung;

Fig.2    eine vertikale Längsquerschnittsdarstellung des Kombizylinders von Fig.1 mit einem Kombizylinder gemäß einer ersten Ausführungsform in Lösestellung;

Fig.3    eine aufgebrochene perspektivische Darstellung des Kombizylinders von Fig.2;

Fig.4    eine Längsquerschnittsdarstellung des Kombizylinders von Fig.2 mit dem Kombizylinder in Zuspannstellung;

Fig. 5    eine zentrale vertikale Längsquerschnittsdarstellung des Kombizylin- ders von Fig.2 in Lösestellung;

Fig.6    ein Diagramm, welches die Abhängigkeit der Federkraft, der Über- setzung i eines Getriebes des Kombizylinders sowie der Zylinderkraft vom Hub s eines Federspeicherkolbens des Kombizylinders gemäß der Erfindung darstellt;

Fig.7    eine horizontale zentrale Längsquerschnittsdarstellung eines Kombi- zylinders gemäß einer weiteren Ausführungsform in Lösestellung;

Fig.8    eine aufgebrochene perspektivische Darstellung des Kombizylinders von Fig.7;

Fig.9    eine horizontale Längsquerschnittsdarstellung des Kombizylinders von Fig.7 in Bremsstellung;

Fig.10    eine vertikale zentrale Längsquerschnittsdarstellung des Kombizylin- ders von Fig.7;

Fig.11    eine Querschnittsdarstellung des Kombizylinders von Fig.7;

Fig.12    eine vertikale Längsquerschnittsdarstellung eines Kombizylinder ge- mäß einer weiteren Ausführungsform in Lösestellung;

Fig.13    eine aufgebrochene perspektivische Darstellung des Kombizylinders von Fig.12;

Fig.14    eine vertikale Längsquerschnittsdarstellung des Kombizylinders von Fig.12 in Bremsstellung;

Fig.15    eine horizontale zentrale Längsquerschnittsdarstellung des Kombizy- linders von Fig.12 in Lösestellung.

Beschreibung der Ausführungsbeispiele

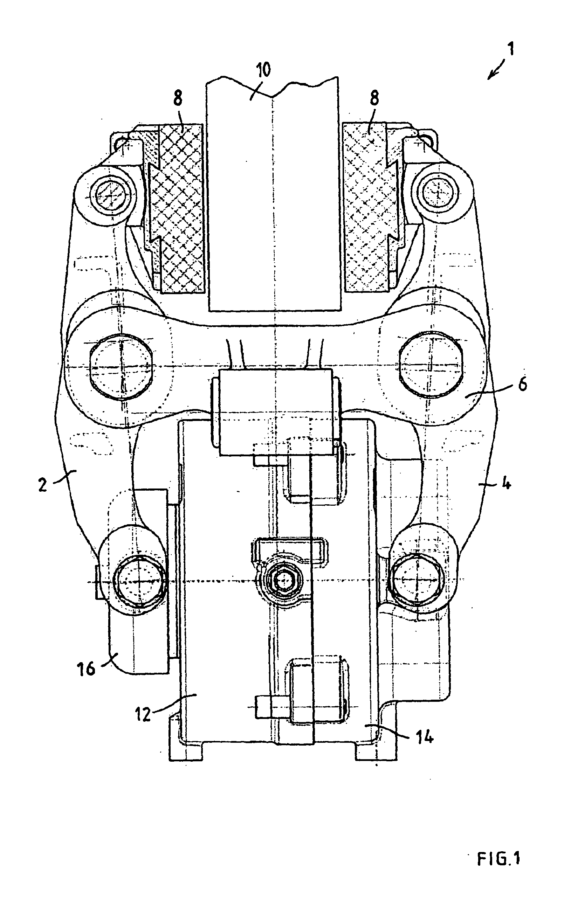

Die in Fig.1 gezeigte Bremszange 1 eines Schienenfahrzeugs weist zwei im wesentlichen parallel zueinander verlaufende Bremszangenhebel 2, 4 auf. Die beiden Bremszangenhebel 2, 4 sind im mittleren Bereich ihrer Längserstreckung durch eine Zugstange 6 gelenkig miteinander verbunden. Die Bremszangenhebel 2, 4 sowie die Zugstange 6 liegen in bzw. verlaufen parallel zu einer zur Zeichenebene parallel verlaufenden Bremszangenebene.

Die einen Enden der Bremszangenhebel 2, 4 tragen vermittels Bolzen angelenkte Bremsbacken 8, welche in eine Bremsscheibe 10 reibschlüssig eingreifen können. Zwischen den anderen Enden der Bremszangenhebel 2, 4 befindet sich ein Kombizylinder 12, dessen Gehäuse 14 an dem einen Bremszangenhebel 4 und dessen Betriebsbremskolben über eine Betriebsbremskolbenstange und ein Spindeljoch 16 am anderen Bremszangenhebel 2 angelenkt ist.

Es ist anhand von Fig.1 ersichtlich, dass die Bremszange 1 ein entsprechend der Hebelverhältnisse der Bremszangenhebel 2, 4 nur geringes Übersetzungsverhältnis aufweist, die Anpresskraft der Bremsbacken 8 also nur um einen niedrigen Übersetzungsfaktor höher als die vom Kombizylinder 12 ausübbare Spreizkraft für die Bremszangenhebel 2, 4 ist.

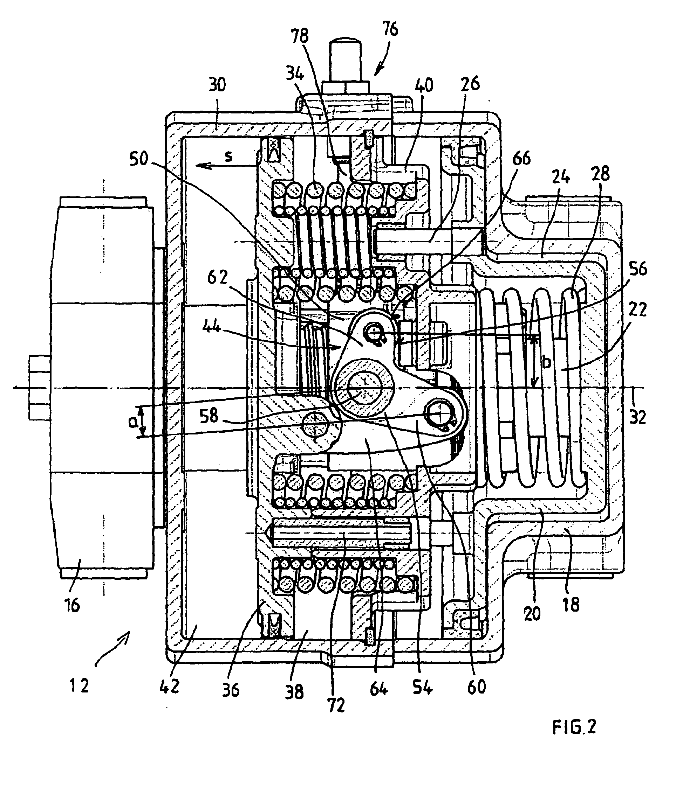

Deswegen ist in Fig.2 ein Kombizylinder 12 in Lösestellung dargestellt, mit welchem eine höhere Bremskraft im Feststellbremsfall erzielbar ist. Der Kombizylinder 12 beinhaltet einen Betriebsbremszylinder 18 als aktive Betriebsbremse mit einem druckmittelbetätigten Betriebsbremskolben 20, welcher über eine Betriebsbremskolbenstange 22 und das Spindeljoch 16 den Bremszangenhebel 2 betätigt, wobei die Druckbeaufschlagung bzw. Druckentlastung des Betriebsbremskolbens 20 durch Be- bzw. Entlüften einer Betriebsbremskammer 24 erfolgt. Eine Verdrehsicherung, z.B. durch einen im Kombizylinder 12 gehaltenen und im Betriebsbremskolben 20 axial geführten Bolzen 26 sorgt dafür, dass der Betriebsbremskolben 20 drehfest im Betriebsbremszylinder 18 geführt wird. Eine Rückholfeder 28 spannt den Betriebsbremskolben 20 in die in Fig.2 gezeigte, dort rechtsseitige Lösestellung vor.

Der Betriebsbremszylinder 18 ist an einen Federspeicherbremszylinder 30 als passive Feststellbremse koaxial in Bezug zu einer Mittelachse 32 des Kombizylinders 12 angeflanscht, in welchem ein gegen die Wirkung vorzugsweise mehrerer ineinander angeordneter Speicherfedern 34 druckmittelbetätigter Federspeicherbremskolben 36 geführt ist. Die Speicherfedern 34 sind in einer Federkammer 38 des Federspeicherbremszylinders 30 untergebracht und stützen sich dabei einerseits am Federspeicherbremskolben 36 und andererseits an einer Trennwand 40 zwischen dem Federspeicherbremszylinder 30 und dem Betriebsbremszylinder 18 ab. Durch Druckbeaufschlagung einer auf der anderen Seite des Federspeicherbremskolbens 36 ausgebildeten Federspeicherbremskammer 42 gelangt der Federspeicherbremskolben 36 gegen die Wirkung der Speicherfedern 34 in die in Fig.2 gezeigte rechtsseitige Lösestellung.

Der Federspeicherbremskolben 36 überträgt im Feststellbremsfall die Kraft der Speicherfedern 34 mittels eines kraftübersetzenden Getriebes 44 auf die Betriebsbremskolbenstange 22 bzw. auf den an sie angebundenen Betriebsbremskolben 20. Von der Betriebsbremskolbenstange 22 wird die Kraft dann auf das Spindeljoch 16 und von dort auf den entsprechenden Bremszangenhebel 2 übertragen, um eine Zuspannbewegung der Bremszange 1 hervorzurufen, bei welcher die Bremsbacken 8 in reibschlüssigen Eingriff mit der Bremsscheibe 10 geraten.

Hierbei ist das Getriebe 44 derart ausgebildet, dass die Bewegungen des Federspeicherbremskolbens 36 und des Betriebsbremskolbens 20 koaxial sind und die Kraftübersetzung i des Getriebes 44 mit steigendem Hub s des Federspeicherbremskolbens 36 größer wird, wie insbesondere die Kurve in Fig.6 veranschaulicht.

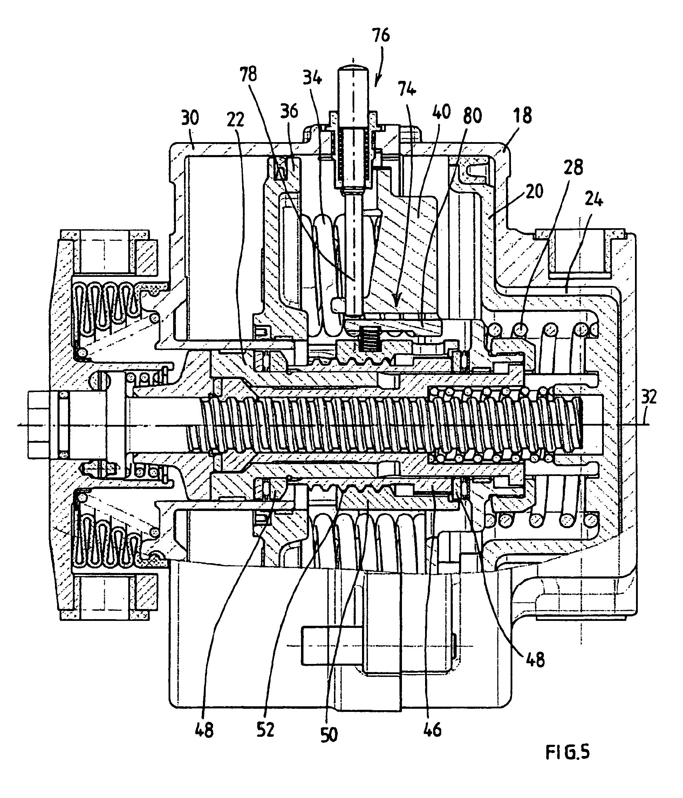

Wie aus Fig.5 hervorgeht, ragt eine Spindel 46 durch eine Durchgangsöffnung der Trennwand 40 in Richtung Betriebsbremskolben 20, von welchem sich die Betriebsbremskolbenstange 22 in Form eines Betriebsbremskolbenrohrs in das Innere der Spindel 46 derart hinein erstreckt, dass das die Spindel 46 auf dem Betriebsbremskolbenrohr 22 drehbar gelagert ist, beispielsweise durch Gleitlagerung. An radial äußeren Schultern des Betriebsbremskolbenrohres 22 sind Axialdrucklager 48 angeordnet, über welche eine Druckkraft von der Spindel 46 auf das Betriebsbremskolbenrohr 22 übertragen werden kann. Damit sind die Spindel 46 und das Betriebsbremskolbenrohr 22 bzw. der Federspeicherbremskolben 36 und der Betriebsbremskolben 20 koaxial zueinander und insbesondere in Bezug zu einer Mittelachse 32 des Kombizylinders 12 angeordnet.

Zur Realisierung der Kraftübersetzung durch das Getriebe 44 ist, wie eine Ausführungsform des Kombizylinders 12 in Fig.2 zeigt, an einem Druckring 50, in welchem die auf dem Betriebsbremskolbenrohr 22 drehbar gelagerte Spindel 46 mittels eines nicht-selbsthemmenden Gewindes 52 verschraubbar ist (siehe Fig.5), wenigstens ein Winkelhebel 54 um eine Achse senkrecht zur Mittelachse 32 des Kombizylinders 12 schwenkbar gelagert, der mit seinem einen Ende am Federspeicherbremskolben 36 angelenkt und mit seinem anderen Ende an einer festen Stützfläche 56 des Kombizylinders 12 abgestützt ist (Fig.2).

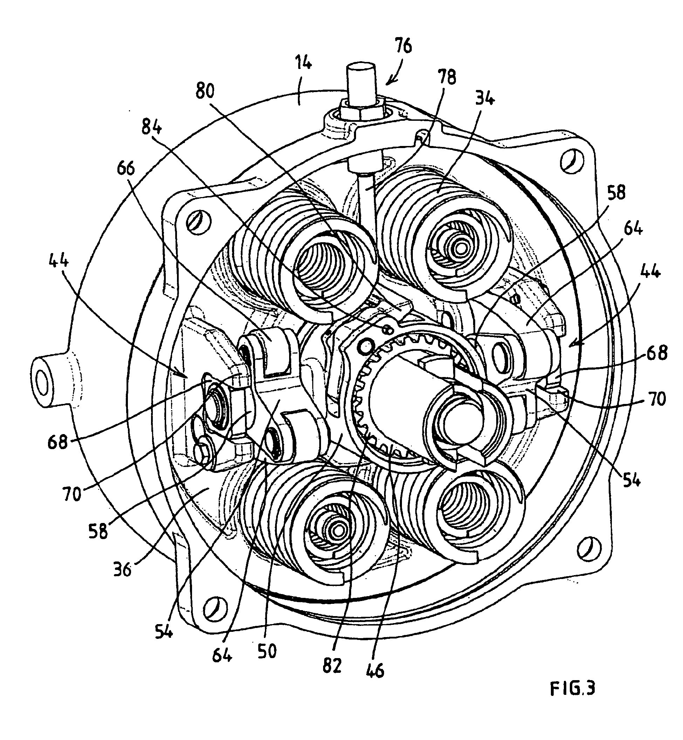

Bevorzugt sind zwei an sich senkrecht zur Mittelachse 32 des Kombizylinders 12 vom Druckring 50 nach außen erstreckenden Lagerzapfen 58 drehbar gelagerte Winkelhebel 54 vorgesehen, welche in Bezug zu einer die Mittelachse 32 enthaltenden Ebene zueinander umgeschlagen angeordnet sind, d.h., dass die Enden der Winkelhebel 54 gegenläufig angeordnet sind, wie aus Fig.3 am besten hervorgeht.

Fig.2 zeigt, dass vorzugsweise jeweils das eine Ende eines Hebelarmes 60 eines Winkelhebels 54 mittels einer doppelt angelenkten Zuglasche 64 mit dem Federspeicherbremskolben 36 verbunden und das andere Ende des anderen Hebelarmes 62 eines Winkelhebels 54 mittels einer auf der festen Stützfläche 56 abrollbaren Stützrolle 66 abgestützt ist, welche an dem anderen Hebelarm 62 des Winkelhebels 54 drehbar gelagert ist. Die Stützfläche 56 für die abrollbaren Stützrollen 66 der Winkelhebel 54 sind bevorzugt an der Trennwand 40 zwischen dem Federspeicherbremszylinder 30 und dem Betriebsbremszylinder 18 ausgebildet und der Federkammer 38 zugewandt, in welcher die Speicherfedern 34 untergebracht sind.

Um den Druckring 50 im Kombizylinder 12 drehfest, aber axial beweglich zu führen, tragen die Lagerzapfen 58 des Druckrings 50 endseitig Gleitkörper 68, welche in sich in Richtung der Mittelachse 32 des Kombizylinders 12 erstreckenden, bevorzugt im Federspeicherbremskolben 36 ausgebildeten Kulissen 70 geführt sind (Fig.3). Der Federspeicherbremskolben 36 ist wiederum durch wenigstens einen sich parallel zur Mittelachse 32 des Kombizylinders 12 erstreckenden, mit ihm fest verbundenen und in der Trennwand 40 geführten Führungsbolzen 72 im Federspeicherbremszylinder 30 gegen Verdrehen gesichert, so dass auch der Druckring 50 dort drehfest abgestützt ist.

Gegenüber dem Druckring 50, genauer in dem Druckring 50 ist die Spindel 46 mittels des durch eine lösbare Drehsperre 74 sperr- und entsperrbares nicht-selbsthemmendes Gewinde 52 verschraubbar (Fig.5). Die lösbare Drehsperre 74 ist Teil einer Notlöseeinrichtung 76 zum Notlösen des Federspeicherbremszylinders 30. Unter Notlösen wird ein mechanisches Lösen der Federspeicherbremse verstanden, wenn die Druckluftversorgung gestört ist und folglich der Federspeicherbremskolben 36 nicht mehr durch Druckmittelbetätigung in die gelöste Stellung verfahren werden kann.

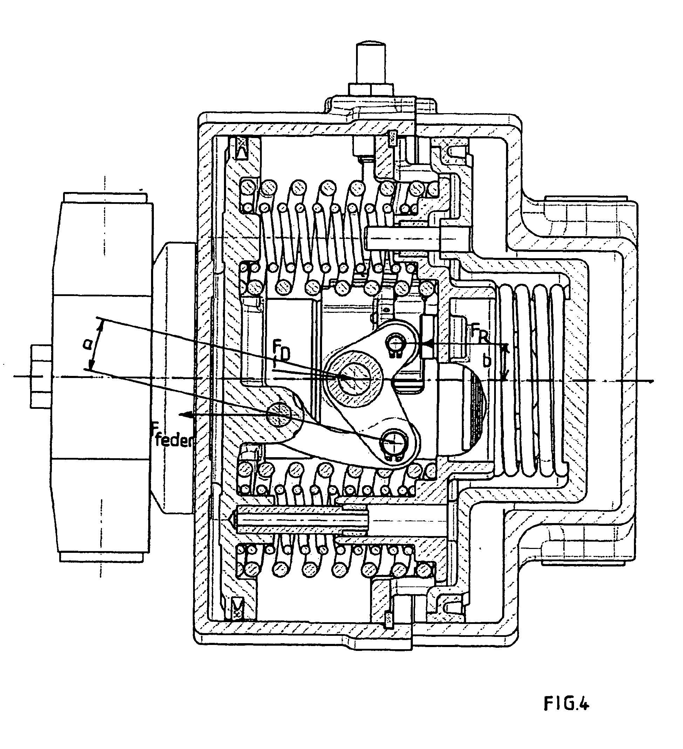

Die Winkelhebel 54 bilden dann ein Hebelgetriebe 44 aus, wobei sich die jeweilige Übersetzung i aus der momentanen Lage der Winkelhebels 54 bzw. der Hebelarme 60, 62 der Winkelhebel 54 ergibt. Damit erfolgt im Feststellbremsfall, in welchem die Federspeicherbremskammer 42 entlüftet und dadurch der Federspeicherbremskolben 36 durch die Wirkung der Speicherfedern 34 von der in Fig.2 gezeigten Lösestellung in die in Fig.4 gezeigte Zuspannstellung gedrängt wird, die Krafteinleitung vom Federspeicherbremskolben 36 in die an diesem angelenkten Zuglaschen 64, welcher ihrerseits wiederum an dem einem Hebelarm 60 eines Winkelhebels 54 angelenkt sind, über die beiden Winkelhebel 54 in den Druckring 50, wobei die Winkelhebel 54 dadurch einerseits mitgezogen und andererseits verdreht werden, wobei sie die Reaktionskräfte an der festen Stützfläche 56 abstützen. Je nach Drehstellung der Winkelhebel 54 besitzen die Hebelarme 60, 62 der Winkelhebel 54 eine andere wirksame Hebellänge a bzw. b in Bezug zu den Mittelachsen der Lagerzapfen 58 des Druckrings 50, wie ein Vergleich von Fig.2 (Lösestellung) mit Fig.4 (Zuspannstellung) anschaulich zeigt.

Mit anderen Worten ändern sich die für das Drehmoment wirksamen Hebellängen a bzw. b an den Hebelarmen 60, 62 der Winkelhebel 54 abhängig von der jeweiligen Drehstellung der Winkelhebel 54, welche wiederum vom Hub des Federspeicherbremskolbens 36 abhängig ist. Damit ändert sich aber auch die Übersetzung i des durch die Winkelhebel 54 gebildeten Hebelgetriebes 44 abhängig vom Hub des Federspeicherbremskolbens 36 im vorliegenden Fall derart, dass die Kraftübersetzung i zunimmt, d.h., dass ein relativ großer Weg des Federspeicherbremskolbens 36 bei einer relativ kleinen Federkraft der Speicherfedern 34 in einen kleinen Weg des Spindeljochs 16 mit einer relativ großen Spreizkraft für die Bremszange 1 übersetzt wird. Der Fachmann wählt dabei die Geometrie, insbesondere die Länge der Hebelarme 60, 62 der Winkelhebel 54 derart, dass die Kraftübersetzung i aufgrund der Winkelhebel 54 mit größer werdendem Drehwinkel bzw. mit größer werdendem Hub des Federspeicherbremskolbens 36 ansteigt, wie die Kurve in Fig.6 veranschaulicht.

Wenn also der Federspeicherbremszylinder 30 zum Zuspannen der Feststellbremse entlüftet wird, so stützt sich die Federkraft der Speicherfedern 34 über den Federspeicherbremskolben 36 und die Zuglaschen 64 an jeweils dem einem Hebelarm 60 der beiden Winkelhebel 54 ab. Die am Druckring 50 drehbar gelagerten Winkelhebel 54 stützen sich dabei mit der Stützrolle 66 des jeweils anderen Hebelarms 62 an der Stützfläche 56 der Trennwand 40 ab. Die Summe $F_D$ aus der Federkraft Feder und der Rollenkraft $F_R$ wird dabei in axialer Richtung auf den Druckring 50, die Spindel 46 und das Betriebsbremskolbenrohr 22 auf das Spindeljoch 16 übertragen.

Mit fortschreitendem Hub des Federspeicherbremskolbens 36 und damit einhergehender Verdrehung der Winkelhebel 54 steigt die wirksame Übersetzung i der Winkelhebel 54. Bei geeigneter Wahl der Längen der Hebelarme 60, 62 bzw. der Winkel zwischen den Hebelarmen 60, 62 bzw. der Längen der Zuglaschen 64 und/oder der Lage deren Anlenkung am Federspeicherbremskolben 36 wird die Reduktion der Federkraft der Speicherfedern 34 über dem Hub des Federspeicherbremskolbens 36 durch die größer werdende Übersetzung i kompensiert, so dass sich etwa ein Verlauf der am Spindeljoch 16 wirksamen Bremskraft gemäß Fig.6 ergibt, welcher über dem Hub s des Federspeicherbremskolbens 36 annähernd konstant ist.

Durch die beiden winkelig am Federspeicherbremskolben 36 angreifenden Zuglaschen 64 wird sowohl in den Federspeicherbremskolben 36 als auch in den Druckring 50 ein Drehmoment um die Mittelachse 32 des Kombizylinders 12 eingeleitet. Dieses Drehmoment wird durch die in den Kulissen 70 geführten Gleitkörper 68 des Druckrings 50 im Federspeicherbremskolben 36 abgestützt, welcher wiederum durch die Führungsbolzen 72 im Federspeicherbremszylinder 30 drehfest gehalten ist (Fig.2).

Die vom Federspeicherbremskolben 36 erzeugte Feststellbremskraft wird folglich über die Winkelhebel 54 als Getriebe 44 in den Druckring 50 eingeleitet und dadurch verstärkt. Vom Druckring 50 wird diese verstärkte Kraft über das sperrbare Gewinde 52 in die Spindel 46 und von dort über das Axialdrucklager 48 in das Betriebsbremskolbenrohr 22 und das Spindeljoch 16 eingeleitet, dessen daraufhin in Fig.2 oder Fig.4 nach links gerichteter Hub letztlich diese Kraft in eine Drehung der Bremszangenhebel 2, 4 umsetzt.

Steht zum Lösen der Feststellbremse keine Druckluft zur Verfügung, beispielsweise wegen eines Defekts oder einer Leckage im Druckluftsystem, so kann sie durch manuelles Betätigen der Notlöseeinrichtung 76 gelöst werden. Dazu wird durch Drücken eines im Kombizylinder 12 vorzugsweise vertikal verschieblich gelagerten Druckstifts 78 eine am Druckring 50 um eine Achse parallel zur Mittelachse 32 des Kombizylinders 12 schwenkbare Klinke 80 aus einer Außenverzahnung 82 der Spindel 46 gehoben, wodurch die Drehsperre zwischen der Spindel 46 und dem Druckring 50 aufgehoben wird (Fig.3). Da das Gewinde 52 zwischen den genannten Teilen nicht selbsthemmend ist, verschraubt sich die Spindel 46 im Druckring 50, bis beide Teile axialkraftfrei sind und der Federspeicherbremskolben 36 am Boden des Federspeicherbremszylinders 30 anschlägt. Und auch der Betriebsbremskolben 20 kann, von der Rückholfeder 28 angetrieben, zusammen mit der Spindel 46 die Lösestellung einnehmen.

Die Klinke 80 wird in ausgehobener Stellung durch Einfallen eines Arretierungsstifts 84 gehalten (Fig. 3). Erst wenn der Federspeicherbremskolben 36 durch Druckbeaufschlagung der Federspeicherbremskammer 42 in seine Lösestellung gedrängt wird und dabei den Druckring 50 mitnimmt, wird der Arretierungsstift 84 durch Anlage an der Trennwand 40 ausgehoben, wodurch die Klinke 80 wieder in die Außenverzahnung 82 der Spindel 46 eingreifen und dadurch die Drehsperre zwischen dieser und dem Druckring 50 wieder herstellen kann.

Innerhalb des Betriebsbremskolbenrohrs 22 ist ein Verschleißnachsteller untergebracht, der beispielsweise durch einen einseitig wirkenden Sprungsteller gebildet wird. Bei einer Betriebsbremsung wird die Betriebsbremskammer 24 belüftet, wodurch der Betriebsbremskolben 20 über die Betriebsbremskolbenstange 22 das Spindeljoch 16 und damit die Bremszange 1 betätigt.

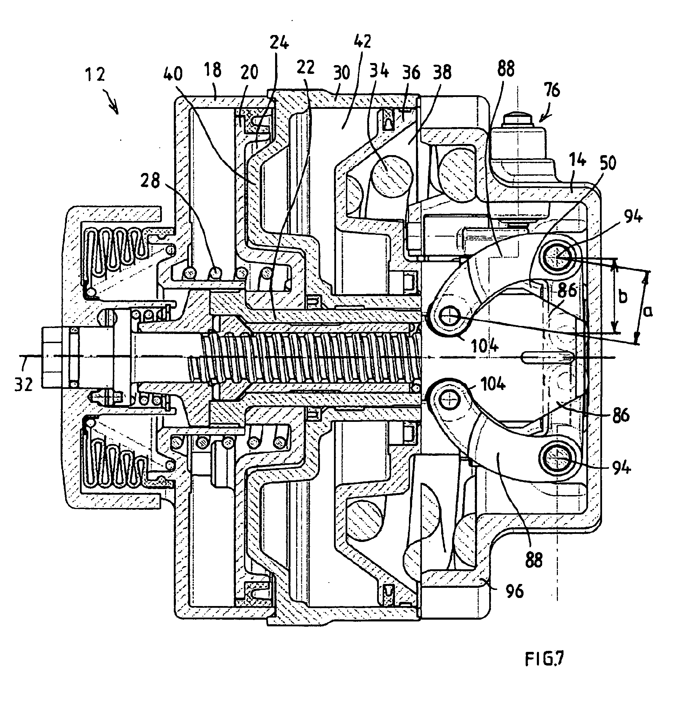

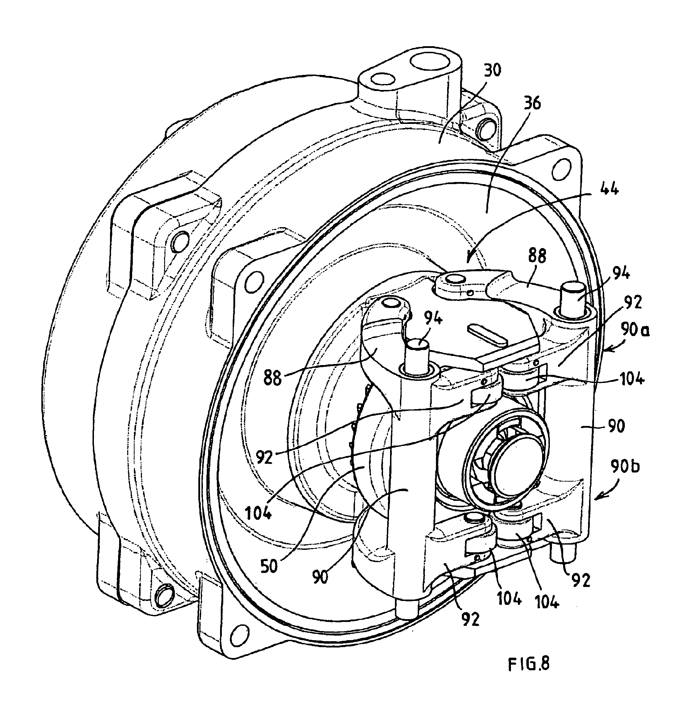

Bei dem zweiten Ausführungsbeispiel der Erfindung nach den Fig.7 bis 11 sind die gegenüber dem vorhergehenden Beispiel gleich bleibenden und gleich wirkenden Teile durch die gleichen Bezugszeichen gekennzeichnet. Im Unterschied zu diesem ist durch den Federspeicherbremskolben 36 wenigstens eine Keilkontur 86 parallel zur Mittelachse 32 des Kombizylinders 12 betätigbar, an welcher ein Hebelarm 88 wenigstens eines am Kombizylinder 12 drehbar gelagerten Hebels 90 entlang führbar ist, dessen anderer Hebelarm 92 sich am Druckring 50 abstützt, wobei ein Entlangführen des einen Hebelarms 88 des Hebels 90 an der Keilkontur 86 eine Drehbewegung des Hebels 90 um eine Hebeldrehachse 94 und damit durch den anderen Hebelarm 92 eine auf den Druckring wirkende, in Bezug zur Bewegung des Federspeicherbremskolbens 36 gleich gerichtete Axialkraft hervorruft, wie am besten Fig.8 veranschaulicht. Dabei ist beispielsweise die Hebeldrehachse 94 des Hebels 90 senkrecht zur Mittelachse 32 des Kombizylinders 12 angeordnet und beispielsweise im Zylinderdeckel 96 des Federspeicherbremszylinders 30 gelagert.

Bevorzugt sind zwei in Bezug zur Mittelachse 32 symmetrische Keilkonturen an zwei Keilplatten 86 vorgesehen, welche den Druckring 50 wenigstens teilweise umfassen und welche mit zwei, zur Mittelachse 32 des Kombizylinders 12 symmetrischen und jeweils zu einem Doppelhebel zusammengefassten Hebeln 90 zusammenwirken. Ein solcher Doppelhebel 90 beinhaltet folglich einen oberen Hebel 90a und einen unteren Hebel 90b mit je einem an der betreffenden Keilkontur 86 geführten Hebelarm 88 und mit je einem an einer Stützfläche des Druckrings 50 geführten Hebelarm 92 (Fig.8).

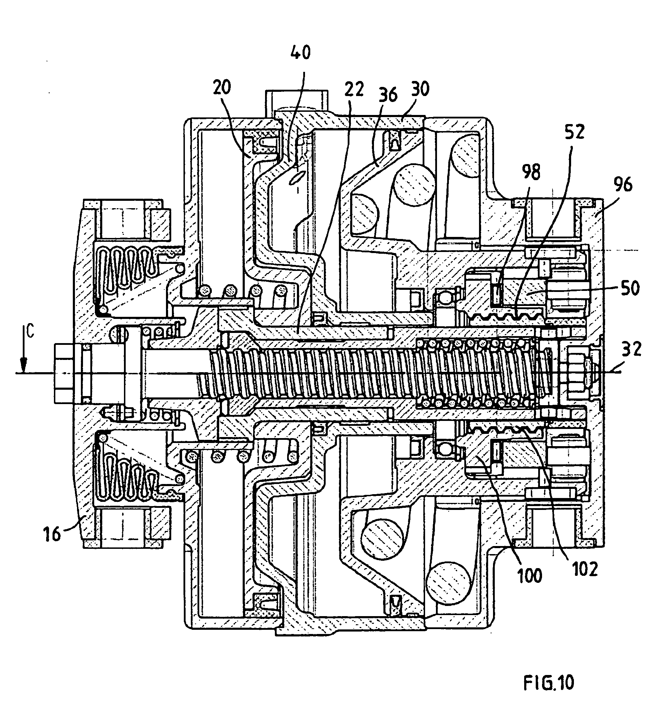

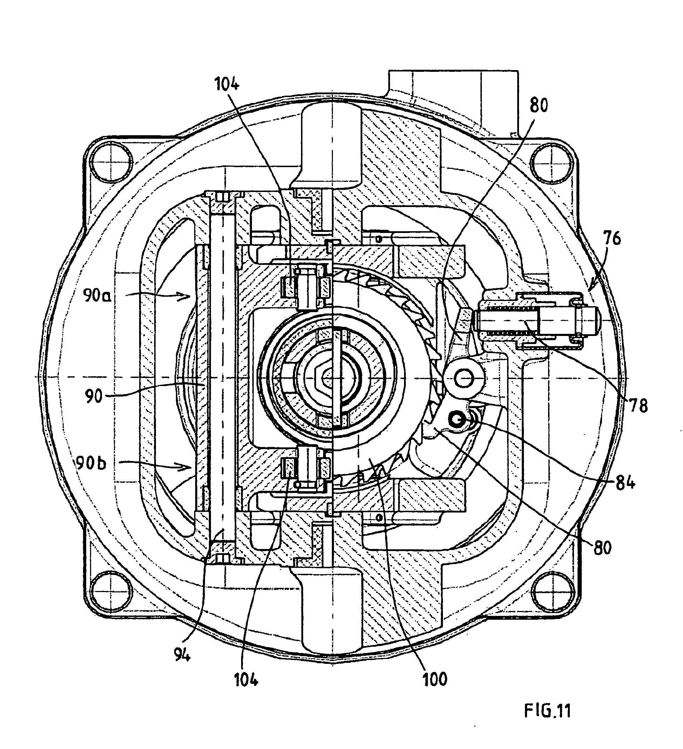

Bei dieser Variante überträgt der Druckring 50 die Axialkraft beispielsweise über ein Axialdrucklager 98 auf ein drehbares Teil eines Spindeltriebs in Form eines Zahnrads 100, welches auf einem drehfesten Teil 102 des Spindeltriebs durch das nicht selbst hemmende Gewinde 52 um eine mit der Mittelachse 32 koaxiale Achse drehbar ist (Fig.10). In die Außenverzahnung 82 des Zahnrads 100 ist wiederum die Klinke 80 der Drehsperre 74 der Notlöseeinrichtung 76 eingreifbar, die im Zylinderdeckel 96 drehbar gelagert ist (Fig.11). Das drehfeste Teil 102 des Spindeltriebs kann dann die Axialkraft auf die Betriebsbremskolbenstange 22 übertragen.

Wie insbesondere aus Fig.11 hervorgeht, ist die Klinke 80 als ein um eine Drehachse 104 parallel zur Mittelachse 32 drehbarer Kipphebel ausgebildet, welcher einendseitig in die Außenverzahnung 82 des Zahnrads 100 eingreifbar und welcher anderendseitig durch den federvorgespannten, manuell betätigbaren, durch eine Durchgangsbohrung aus dem Gehäuse 14 ein Stück weit heraus ragenden Druckstift 78 beaufschlagbar ist, um abhängig von der Lage des Druckstifts 78 das Zahnrad 100 mit dem Gehäuse 14 des Kombizylinders 12 drehfest zu verbinden oder um diese Verbindung zu lösen, um eine freie Drehbarkeit des Zahnrads 100 auf dem drehfesten Teil 102 des Spindeltriebs zu ermöglichen.

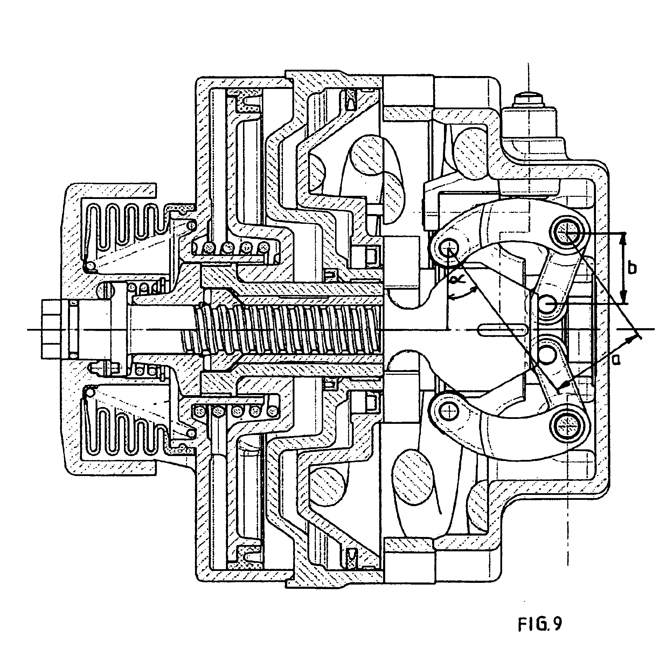

Wenn sich folglich der Federspeicherbremszylinder 30 ausgehend von der in Fig.7 gezeigten Lösestellung im Festbremsfall in die in Fig.9 gezeigte Zuspannstellung bewegt, so werden die beiden Keilkonturen 86 mitbewegt, wodurch die einen Hebelarme 88 der Doppelhebel 90 an den Keilkonturen 86 entlangbewegt werden und damit eine Drehbewegung der Doppelhebel 90 auslösen, wodurch die anderen Hebelarme 92 den Druckring 50 in eine in Bezug zur Bewegung des Federspeicherbremskolbens 36 gleich gerichtete Axialbewegung versetzen, wie am besten Fig.8 zeigt. Endseitig sind die anderen Hebelarme 92 der Doppelhebel 90 beispielsweise mit Rollen 104 versehen, um ein Abrollen auf den Keilkonturen 86 bzw. auf dem Druckring 50 zu ermöglichen.

Das Übersetzungsverhältnis i ergibt sich aus den Längen a und b der Hebelarme 88, 92 der Drehhebel 90 und dem vom Hub des Federspeicherbremszylinders 30 abhängigen Keilwinkel $\alpha$ der Keilkonturen 86 im jeweiligen Berührpunkt der Rollen 104 (vgl. Fig.7 und Fig. 9):

$$i = \frac{a}{b \cdot \sin \alpha}$$

Der drehfest im Kombizylinder 12 gelagerte Druckring 50 überträgt dann die auf ihn wirkende Axialkraft durch das Axialdrucklager 98 auf das Zahnrad 100, welches aber im normalen Betrieb durch die Drehsperre 74 an der Drehung gegenüber dem drehfesten Teil 102 gehindert ist. Vom drehfesten Teil 102 des Spindeltriebs wird die Axialkraft dann auf die Betriebsbremskolbenstange 22 übertragen.

Im Normalbetrieb ist der Druckstift 78 der Drehsperre 74 durch eine Feder nach außen belastet, so dass die Klinke 80 in die Außenverzahnung 82 des Zahnrads 100 eingreift und dessen Drehung verhindert (Fig.11). Wenn zum Notlösen der Feststellbremse der Druckstift 78 der Drehsperre 74 dann durch Drücken betätigt wird kippt die Klinke 80 um die Drehachse, wodurch sie einendseitig mit der Außenverzahnung 82 des Zahnrads 100 außer Eingriff gerät. Dies bewirkt, dass sich das Zahnrad 100 gegenüber dem drehfesten Teil 102 des Spindeltriebs über das nicht selbsthemmende Gewinde 52 frei drehen kann bis beide Teile zueinander kraftfrei sind. Dabei bewegt sich der Federspeicherbremskolben 36 bis zum Anschlag am Boden des Federspeicherbremszylinders 30 und der Betriebsbremskolben 20 kann sich, von der Rückholfeder 28 getrieben, zusammen mit der Spindel 46 in die in Fig.7 gezeigte Lösestellung bewegen.

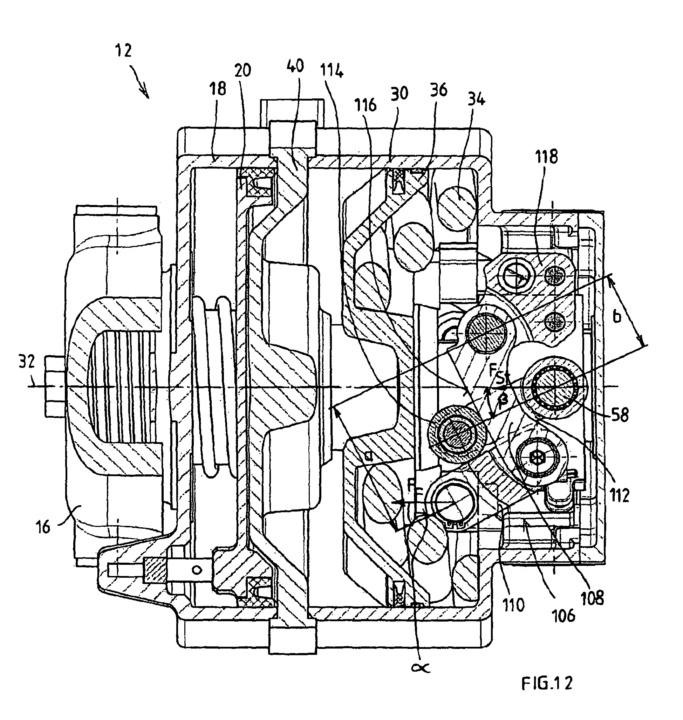

Bei dem dritten Ausführungsbeispiel der Erfindung nach den Fig.12 bis 15 sind die gegenüber den vorhergehenden Beispielen gleich bleibenden und gleich wirkenden Teile durch die gleichen Bezugszeichen gekennzeichnet.

Wie bei den anderen Ausführungsbeispielen werden der Federspeicherbremszylinder 30 und der Betriebsbremszylinder 18 koaxial angeordnet. Als Speicherfeder 34 ist beispielsweise eine Kegelfeder vorgesehen, die durch einen ringförmigen Federspeicherbremskolben 36 gespannt wird.

Zwischen dem Federspeicherbremskolben 36 und der Betriebsbremskolbenstange 22 des Betriebsbremszylinders 18 sind zwei Kulissenmechanismen 106 punktsymmetrisch oder in Bezug zu einer die Mittelachse 32 des Kombizylinders 12 enthaltenden Ebene zueinander umgeschlagen angeordnet, welche die Kraft der Speicherfeder 34 auf die Betriebsbremskolbenstange 22 des Betriebsbremszylinders 18 übertragen. Ein solcher Kulissenmechanismus 106 besteht im wesentlichen aus einem Kulissenhebel 108, dessen eines Ende drehbar am Zylindergehäuse 14 gelagert und dessen anderes Ende über eine Zuglasche 110 am Federspeicherbremskolben 36 angelenkt ist sowie aus einer Rollenlasche 112, die an einem Ende drehbar am Druckring 50 gelagert ist und die am anderen Ende eine Stützrolle 114 trägt, die im Eingriff mit einer Kulissenfläche 116 des Kulissenhebels 108 steht.

Wenn der Federspeicherbremskolben 36 einen Hub ausführt, so dreht sich der Kulissenhebel 108 um seinen Lagerpunkt an einem Lagerbock 118 im Zylindergehäuse. Durch die Drehung des Kulissenhebels 108 verändert sich der Winkel zwischen der Rollenlasche 112 und der Kulissenfläche 116, der sich normalerweise auf 90 Grad einstellt. Die Rollenlasche 112 dreht sich daraufhin selbstständig soweit, bis die Kraftwirkungslinie wieder senkrecht auf die Tangente der Kulissenfläche 116 im Berührpunkt der Stützrolle 114 steht. Dadurch verändern sich die wirksamen Hebelarme und folglich auch die Übersetzung.

Durch eine geeignete Wahl der Kulissengeometrie, der Position der Lagerpunkte und der Hebel- und Laschenlängen kann eine über dem Kolbenhub des Federspeicherbremskolbens 36 ansteigende Übersetzung erzielt werden, durch die der Kraftabfall der Speicherfeder 34 über dem Hub kompensiert bzw. wenigstens reduziert wird.

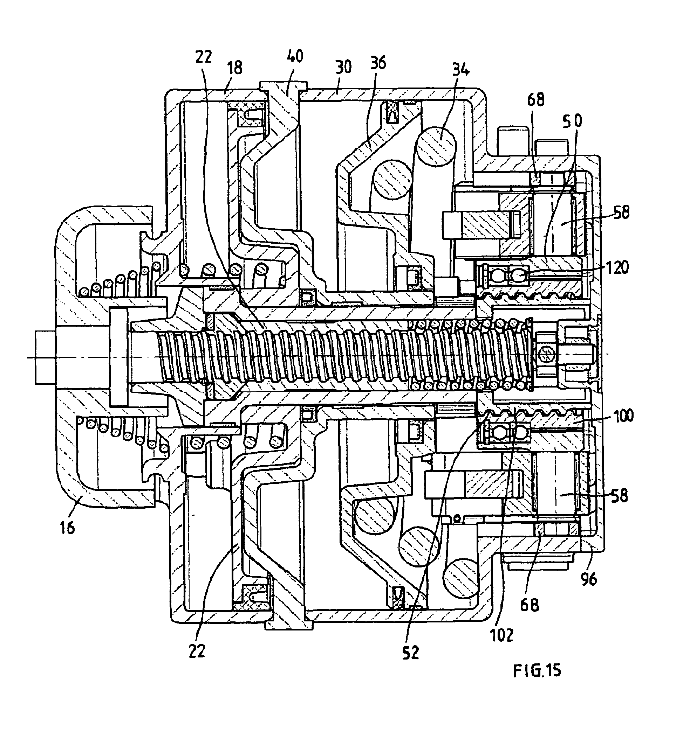

Wie bei den anderen Ausführungsbeispielen, besteht das Zylindergehäuse 14 des Kombizylinders 1 im wesentlichen aus drei Teilen, die vorzugsweise miteinander verschraubt sind. Der Betriebsbremszylinder 18 ist in der linken Zylinderhälfte platziert (Fig.15), der Federspeicherbremszylinder 30 ist in der rechten Hälfte angeordnet und wird durch den Zylinderdeckel 96 verschlossen. Durch den Zylinderdeckel 96 wird die Montierbarkeit des Federspeicherspeicherbremszylinders 30 gewährleistet.

Der ringförmige Betriebsbremskolben 20 ist fest mit dem Betriebsbremskolbenrohr 22 verbunden, beispielsweise durch einen druckdichten Presssitz und wird am Außendurchmesser durch eine Aufpressmanschette und am Innendurchmesser durch einen Wellendichtring zwischen Zylinderboden und Betriebsbremskolbenrohr 22 abgedichtet. Der Betriebsbremskolben 20 ist durch wenigstens einen Führungsbolzen relativ zum Gehäuse gegen Verdrehen gesichert.

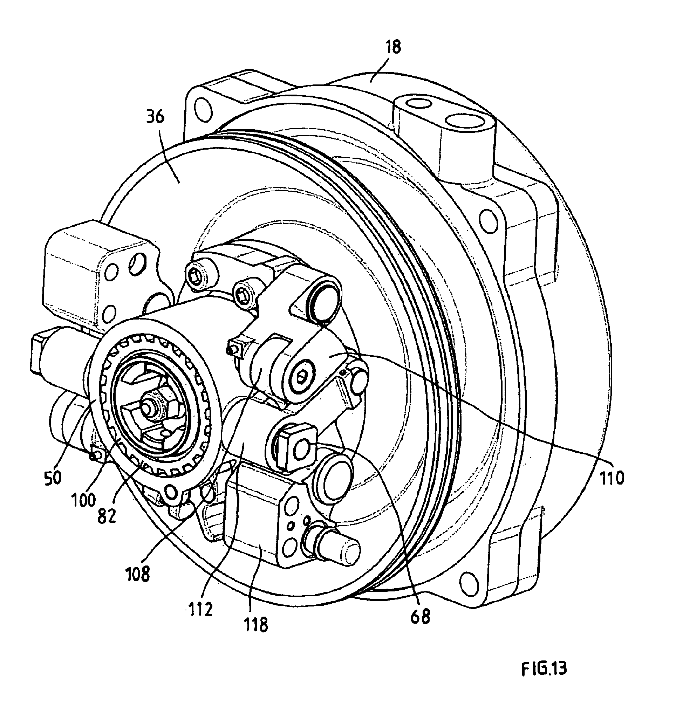

Das Betriebsbremskolbenrohr 22 ist zum einen im Betriebsbremszylinder 18 und zum anderen in der Trennwand 40 geführt. Der Federspeicherbremszylinder 30 beinhaltet eine äußere Dichtfläche für den als Ringkolben ausgebildeten Federspeicherbremskolben 36 und hat Führungsflächen für Gleitsteine 68 des Druckrings 50, die wiederum an den Enden von zwei senkrecht zur Mittelachse 32 weg ragenden Lagerzapfen 58 des Druckrings 50 gehalten sind (Fig.13). In der Trennwand 40 sind in den Schnittdarstellungen nicht sichtbare Luftanschlüsse für die Federspeicherbremskammer 42 und die Betriebsbremskammer 24 ausgebildet. Der Federspeicherbremskolben 36 ist mit Dichtungen am Innen- und Außendurchmesser versehen. Mit dem Federspeicherbremskolben 36 beispielsweise verschraubt sind Lagerzapfen für die an ihn angelenkten Zuglaschen 110, wobei deren Drehachsen senkrecht zur Mittelachse 32 des Kombizylinders 1 angeordnet sind. Die Speicherfeder 34, die hier beispielsweise als Kegelfeder ausgeführt ist, stützt sich einerseits am Zylindergehäuse 14 und andererseits am Federspeicherbremskolben 36 ab.

Die Kulissenhebel 108 sind einerseits über die Zuglaschen 110 am Federspeicherbremskolben 36 angelenkt und andererseits in den mit dem Zylindergehäuse 14 fest verschraubten Lagerböcken 118 drehbar gelagert. Die an den Lagerzapfen 58 des Druckrings 50 um eine Achse senkrecht zur Mittelachse 32 des Kombizylinders 12 gelagerten Rollenlaschen 112 weisen an ihrem von den Lagerzapfen 58 weg weisenden Enden die Stützrollen 114 auf, welche schließlich die Kraft von den Kulissenhebeln 108 in den Druckring 50 einleiten.

An dem Druckring 50 ist die Klinke 80 der Drehsperre 74 der Notlöseeinrichtung 76 gelagert (Fig.13). Die Notlöseeinrichtung 76 beinhaltet wiederum ein nicht selbsthemmendes Gewinde 52 zum mechanischen Abbau der Parkbremskraft, wenn zum Spannen der Speicherfeder 34 keine Druckluft zur Verfügung steht und besteht weiterhin aus dem durch das nicht selbsthemmende Gewinde 52 auf dem drehfesten Teil 102 des Spindeltriebs verschraubbare Zahnrad 100, welches mittels beispielsweise zweier Wälzlager 120 im Druckring 50 drehbar gelagert ist, dem drehfesten Teil 102 des Spindeltriebs, der über zwei Klauen in einen Schlitz des Betriebsbremskolbenrohrs 22 eingreift und damit zum einen drehfest mit diesem ist und zum anderen in Bremszuspannrichtung Axialkräfte auf das Betriebsbremskolbenrohr 22 übertragen kann, der Klinke 80, welche im Druckring 50 gelagert ist und mit dem Zahnrad 100 in Eingriff bringbar ist. Sie stützt das im nicht selbsthemmenden Gewinde 52 entstehende Drehmoment ab und leitet dieses auf den Druckring 50, welcher sich wiederum durch die Gleitsteine 68 in Kulissen des Zylindergehäuses 14 abstützt. Wie bei den anderen Ausführungsbeispielen wird bei einer Notlösebetätigung die Klinke 80 manuell aus der Außenverzahnung 82 des Zahnrads 100 gehoben.

Zum pneumatischen Lösen des Federspeicherbremszylinders 30 (Fig.12) wird die Federspeicherbremskammer 42 mit Druck beaufschlagt, so dass die Speicherfeder 34 vom Federspeicherbremskolben 36 vorgespannt wird.

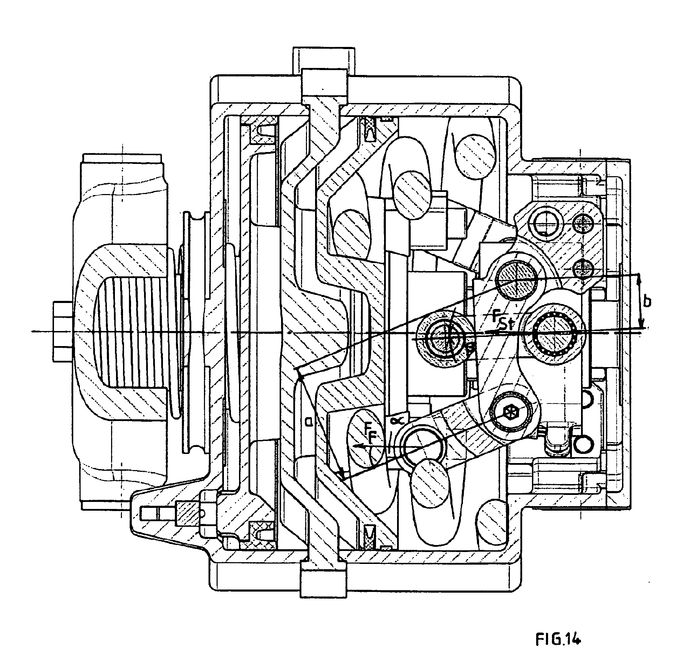

Zum Zuspannen der Federspeicherbremse (Fig.14) wird die Federspeicherbremskammer 42 entlüftet, so dass sich die Federkraft der Speicherfeder 34 über die beiden Zuglaschen 110, die Kulissenhebel 108 und die Rollenlaschen 112 auf den Druckring 50 abstützt. Dieser leitet die Kraft über die Notlöseeinrichtung 76 an das Betriebsbremskolbenrohr 22 und von dort auf das Spindeljoch 16. Dabei stellen sich die beiden Rollenlaschen 112 automatisch auf die vom Kolbenhub abhängige Winkellage der Kulissenhebel 108 ein. Sie nehmen die Position ein, bei der die Kraftwirkungslinie der Rollenlaschen 112 senkrecht zur Tangente der Kulissenflächen 116 im jeweiligen Berührpunkt der Stützrollen 114 steht. Mit anderen Worten liegen dann der Lagerpunkt der Rollenlasche 112, der Mittelpunkt der Stützrolle 114 und der Berührpunkt der Stützrolle 114 mit der Kulissenfläche 116 auf einer Geraden.

Bei der hier dargestellten Ausführungsform ist die Kulissenfläche 116, auf welcher die Stützrolle 114 abrollt, eben. Abhängig vom gewünschten Übersetzungsverhältnis ist jedoch auch beispielsweise eine konkave oder konvexe Kulissenfläche 116 denkbar. Bei einer konvexen Fläche darf der Krümmungsradius jedoch nicht kleiner werden als die Länge der Rollenlasche 112, damit sich ein stabiles Gleichgewicht einstellen kann.

Das vom Hub des Federspeicherbremskolbens 36 abhängige Übersetzungsverhältnis i lässt sich aus den Längen a und b der wirksamen Hebelarme und den Winkeln α und β berechnen (Fig.12 und Fig.14):

$$i = \frac{a \cdot \cos \beta}{b \cdot \cos \alpha}$$

Die Kraft $F_{St}$ auf den Druckring 50 bzw. auf das Spindeljoch 16 ergibt sich damit zu:

$$F_{St} = i \cdot F_F$$

Wenn zum Lösen der zugespannten Federspeicherbremse keine Druckluft zur Verfügung steht, beispielsweise infolge von Leckage, so kann die Federspeicherbremse durch manuelles Betätigen der Notlöseeinrichtung 76 gelöst werden. Dazu wird durch Drücken der Notlösebetätigung die im Druckring 50 gelagerte Klinke 80 aus der Verzahnung 82 des Zahnrads 100 gedrückt, wodurch die Verdrehsicherung zwischen dem drehfesten Teil 102 des Spindeltriebs und dem Zahnrad 100 aufgehoben ist. Da das Gewinde 52 zwischen den beiden Teilen nicht selbsthemmend ist, verschraubt sich das Zahnrad 100 auf dem drehfesten Teil 102 bis beide Teile zueinander kraftfrei sind. Dabei geht der Federspeicherbremskolben 36 in Lösestellung und auch der Betriebsbremskolben 20 kann, von der Rückholfeder 28 angetrieben, zusammen mit dem drehfesten Teil 102 seinerseits die Lösestellung einnehmen.

Bezugszahlenliste

1   Bremszange

2   Bremszangenhebel

4   Bremszangenhebel

6   Zugstange

8   Bremsbacken

10   Bremsscheibe

12   Kombizylinder

14   Gehäuse

16   Spindeljoch

18   Betriebsbremszylinder

20   Betriebsbremskolben

22   Betriebsbremskolbenstange

24   Betriebsbremskammer

26   Bolzen

28   Rückholfeder

30   Federspeicherbremszylinder

32   Mittelachse

34   Speicherfeder

36   Federspeicherbremskolben

38   Federkammer

40   Trennwand

42   Federspeicherbremskammer

44   Getriebe

46   Spindel

48   Axialdrucklager

50   Druckring

52   Gewinde

54   Winkelhebel

56   Stützfläche

58   Lagerzapfen

60   Hebelarm

62   Hebelarm

64   Zuglasche

66   Stützrolle

68   Gleitkörper

70   Kulissen

| 72 | Führungsbolzen |
|---|---|
| 74 | Drehsperre |
| 76 | Notlöseeinrichtung |
| 78 | Druckstift |
| 80 | Klinke |
| 82 | Außenverzahnung |
| 84 | Arretierungsstift |
| 86 | Keilkontur |
| 88 | Hebelarm |
| 90 | Hebel |
| 90 a | oberer Hebel |
| 90 b | unterer Hebel |
| 92 | Hebelarm |
| 94 | Hebeldrehachse |
| 96 | Zylinderdeckel |
| 98 | Axialdrucklager |
| 100 | drehbares Teil des Spindeltriebs |
| 102 | drehfestes Teil des Spindeltriebs |
| 104 | Rollen |
| 106 | Kulissenmechanismus |
| 108 | Kulissenhebel |
| 110 | Zuglasche |
| 112 | Rollenlasche |
| 114 | Stützrolle |
| 116 | Kulissenfläche |
| 118 | Lagerbock |
| 120 | Wälzlager |

**Patentansprüche**

1. Kombizylinder (12) beinhaltend einen Betriebsbremszylinder (18) als aktive Betriebsbremse mit wenigstens einem druckmittelbetätigten Betriebsbremskolben (20), welcher über eine Betriebsbremskolbenstange (22) einen Bremsmechanismus (1) betätigt, sowie einen Federspeicherbremszylinder (30) als passive Feststellbremse mit einem gegen die Wirkung wenigstens einer Speicherfeder (34) druckmittelbetätigten Federspeicherbremskolben (36), wobei der Federspeicherbremskolben (36) im Feststellbremsfall die Kraft der wenigstens einen Speicherfeder (34) mittels eines kraftübersetzenden Getriebes (44) auf die Betriebsbremskolbenstange (22) überträgt, **dadurch gekennzeichnet, dass** das Getriebe (44) derart ausgebildet ist, dass die Bewegungen des Federspeicherbremskolbens (36) und der Betriebsbremskolbenstange (22) koaxial sind und die Kraftübersetzung mit steigendem Hub des Federspeicherbremskolbens (36) größer wird.

2. Kombizylinder nach Anspruch 1, **dadurch gekennzeichnet, dass** ein drehfest gelagerter, koaxial zu einer Mittelachse (32) des Kombizylinders (12) betätigbarer Druckring (50) vorgesehen ist, welcher Axialkräfte auf einen Spindeltrieb (46, 50; 100, 102) ausübt, dessen einer Teil (50; 102) drehfest und dessen anderer Teil (46; 100) koaxial zur Mittelachse (32) drehbar gelagert ist, wobei die Drehbewegung des drehbaren Teils (46; 100) des Spindeltriebs (46, 50; 100, 102) mittels einer lösbaren Drehsperre (74) zur Axialkraftübertragung zwischen dem drehfesten Teil (50; 102) und dem drehbaren Teil (46; 100) sperrbar und zur Aufhebung dieser Axialkraftübertragung entsperrbar ist.

3. Kombizylinder nach Anspruch 2, **dadurch gekennzeichnet, dass** das Gewinde (52) ein nicht-selbsthemmendes Gewinde ist.

4. Kombizylinder nach Anspruch 2 oder 3, **dadurch gekennzeichnet, dass** die lösbare Drehsperre (74) von einer Notlöseeinrichtung (76) zum Notlösen der Feststellbremse umfasst ist.

5. Kombizylinder nach einem der Ansprüche 2 bis 4, **gekennzeichnet durch** eine Axialkraftübertragung zwischen dem Spindeltrieb (46, 50; 100, 102) und der Betriebsbremskolbenstange (22).

6. Kombizylinder nach einem der Ansprüche 2 bis 5, **dadurch gekennzeichnet, dass** an dem Druckring (50) zwei in Bezug auf die Mittelachse (32) exzentrische Getriebe (44) derart vorgesehen sind, dass sich Drehmomente um eine Achse senkrecht zur Mittelachse (32) kompensieren.

7. Kombizylinder nach einem der Ansprüche 2 bis 6, **dadurch gekennzeichnet, dass** der Druckring (50) und der drehfeste Teil des Spindeltriebs (46, 50) zusammengefasst sind und die Drehsperre (74) zwischen dem Druckring (50) und dem drehbaren Teil (46) des Spindeltriebs (46, 50) angeordnet ist.

8. Kombizylinder nach Anspruch 7, **dadurch gekennzeichnet, dass** an dem Druckring (50) wenigstens ein senkrecht zur Mittelachse (32) des Kombizylinders (12) angeordneter Lagerzapfen (58) ausgebildet ist, an dem wenigstens ein Winkelhebel (54) schwenkbar gelagert ist, der mit seinem einen Ende am Federspeicherbremskolben (36) angelenkt und mit seinem anderen Ende an einer festen Stützfläche (56) des Kombizylinders (12) derart abgestützt ist, dass bei einer Betätigung des Federspeicherbremskolbens (36) im Festbremsfall eine Drehung des abgestützten Winkelhebels (54) um den Lagerzapfen (58) und damit eine gleichgerichtete Betätigung des Druckrings (50) ausgelöst wird.

9. Kombizylinder nach Anspruch 8, **dadurch gekennzeichnet, dass** zwei an sich senkrecht zur Mittelachse (32) des Kombizylinders (12) nach außen erstreckenden Lagerzapfen (58) des Druckrings (50) drehbar gelagerte Winkelhebel (54) vorgesehen sind, welche in Bezug zu einer die Mittelachse (32) des Kombizylinders (12) enthaltenden Ebene zueinander umgeschlagen angeordnet sind.

10. Kombizylinder nach Anspruch 9, **dadurch gekennzeichnet, dass** ein Hebelarm (60) des Winkelhebels (54) mittels einer doppelt angelenkten Zuglasche (64) mit dem Federspeicherbremskolben (36) verbunden ist.

11. Kombizylinder nach Anspruch 9 oder 10, **dadurch gekennzeichnet, dass** ein anderer Hebelarm (62) des Winkelhebels (54) mittels einer auf der festen Stützfläche (56) abrollbaren Stützrolle (66) abgestützt ist.

12. Kombizylinder nach Anspruch 11, **dadurch gekennzeichnet, dass** die Lagerzapfen (58) des Druckrings (50) endseitig Gleitkörper (68) tragen, welche in sich in Richtung der Mittelachse (32) des Kombizylinders (1) erstreckenden Kulissen drehfest geführt sind.

13. Kombizylinder nach Anspruch 12, **dadurch gekennzeichnet, dass** die Stützfläche (56) für den Winkelhebel (54) an einer Trennwand (40) zwischen dem Federspeicherbremszylinder (30) und dem Betriebsbremszylinder (18) ausgebildet ist.

14. Kombizylinder nach Anspruch 13, **dadurch gekennzeichnet, dass** die Trennwand (40) eine Stützfläche für die wenigstens eine Speicherfeder (34) des Federspeicherbremszylinders (30) bildet.

15. Kombizylinder nach einem der Ansprüche 2 bis 14, **dadurch gekennzeichnet, dass** die Drehsperre (74) eine in eine Außenverzahnung (82) des drehbaren Teils (100) des Spindeltriebs (100, 102) eingreifbare, handbetätigte Klinke (80) beinhaltet, welche am Druckring (50) drehbar gelagert ist.

16. Kombizylinder nach einem der Ansprüche 2 bis 6, **dadurch gekennzeichnet, dass** durch den Federspeicherbremskolben (36) wenigstens eine Keilkontur (86) parallel zur Mittelachse (32) des Kombizylinders (12) betätigbar ist, an welcher ein Hebelarm (88) wenigstens eines am Kombizylinder (12) drehbar gelagerten Hebels (90) entlang führbar ist, dessen anderer Hebelarm (92) sich am Druckring (50) abstützt, wobei ein Entlangführen des einen Hebelarms (88) des Hebels (90) an der Keilkontur (86) eine Drehbewegung des Hebels (90) um eine Hebeldrehachse (94) und damit eine in Bezug zur Bewegung des Federspeicherbremszylinders (36) gleich gerichtete Axialkraft auf den Druckring (50) hervorruft.

17. Kombizylinder nach Anspruch 16, **dadurch gekennzeichnet, dass** die Hebeldrehachse (94) des Hebels (90) senkrecht zur Mittelachse (32) des Kombizylinders (12) angeordnet ist.

18. Kombizylinder nach Anspruch 16 oder 17, **dadurch gekennzeichnet, dass** zwei, den Druckring (50) in Richtung der Hebeldrehachse (94) des Hebels (90) gesehen wenigstens teilweise umgreifende Keilkonturen (86) vorgesehen sind, welche mit zwei, zur Mittelachse (32) des Kombizylinders (12) symmetrischen und zu einem Doppelhebel (90) zusammengefassten Hebeln zusammen wirken.

19. Kombizylinder nach einem Ansprüche 16 bis 18, **dadurch gekennzeichnet, dass** der Druckring (50) die Axialkraft über ein Axialdrucklager (98) auf ein das drehbare Teil des Spindeltriebs (100, 102) bildendes Zahnrad (100) überträgt, in dessen Verzahnung (82) eine handbetätigbare Klinke (80) der Drehsperre (74) eingreifbar ist, wobei das Zahnrad (100) auf einem drehfesten Teil (102) des Spindeltriebs (100, 102) über das Gewinde (52) drehbar gelagert ist, welches die Axialkraft auf die Betriebsbremskolbenstange (22) überträgt.

20. Kombizylinder nach einem der Ansprüche 2 bis 6, **dadurch gekennzeichnet, dass** ein Kulissenmechanismus beinhaltend wenigstens eine am Druckring (50) angelenkte Rollenlasche (112) mit wenigstens einer Kulissenführung vorgesehen ist, in welcher wenigstens ein Kulissenhebel (108) geführt ist, der einerseits am Gehäuse (14) des Kombizylinders (12) und andererseits an wenigstens einer am Federspeicherbremszylinder (36) angelenkten Zuglasche (110) angelenkt ist.

**21.** Kombizylinder nach Anspruch 20, **dadurch gekennzeichnet, dass** die Rollenlasche (112) an ihrem vom Druckring (50) weg weisenden Ende mit einer drehbaren Stützrolle (114) versehen ist, welche auf einer Kulissenfläche (116) des Kulissenhebels (108) abrollbar ist.

**22.** Kombizylinder nach Anspruch 20 oder 21, **dadurch gekennzeichnet, dass** der Druckring (50) durch wenigstens eine Gleitführung (68) unverdrehbar im Gehäuse (14) des Kombizylinders (1) gelagert ist.

**23.** Kombizylinder nach einem der Ansprüche 20 bis 22, **dadurch gekennzeichnet, dass** zwei Rollenlaschen (112) mit Kulissenführungen, zwei in den Kulissenführungen geführte Kulissenhebel (108) sowie zwei Zuglaschen (110) vorgesehen sind, welche in Bezug zu einer die Mittelachse (32) des Kombizylinders (12) enthaltenden Ebene zueinander umgeschlagen angeordnet sind.

**24.** Kombizylinder nach Anspruch 23, **dadurch gekennzeichnet, dass** der Druckring (50) zwei senkrecht zur Mittelachse (32) angeordnete Lagerzapfen (58) aufweist, welche je eine Lagerung für eine Rollenlasche (112) tragen.

**25.** Bremszangeneinheit (1) einer Scheibenbremse eines Schienenfahrzeugs beinhaltend wenigstens einen Kombizylinder (12) nach einem der vorhergehenden Ansprüche.

**Claims**

**1.** Combination cylinder (12) comprising a service brake cylinder (18) for an active service brake with at least one pressure-medium-actuated service brake piston (20) which actuates a brake mechanism (1) by means of a service brake piston rod (22) and a spring brake cylinder (30) for a passive holding brake with a pressure-medium-actuated spring brake piston (36) that acts in opposition to at least one spring (34), such that when the holding brake is applied, the spring brake piston (36) transfers the force of the at least one spring (34) to the service brake piston rod (22) via a force-transmitting transmission device (44), **characterised in that** the transmission device (44) is designed such that the movements of the spring brake piston (36) and the service brake piston rod (22) are coaxial and, with increasing stroke of the spring brake piston (36), the force transmission increases.

**2.** Combination cylinder according to Claim 1, **characterised in that** a thrust ring (50) that is mounted rotationally fixed and can be actuated coaxially with a central axis (32) of the combination cylinder (12) is provided, which exerts axial forces on a spindle drive (46, 50; 100, 102), one part (50; 102) of which is rotationally fixed whereas the other part (46; 100) is mounted to rotate coaxially with the said central axis (32), such that the rotation movement of the rotating part (46; 100) of the spindle drive (46, 50; 100; 102) can be blocked by means of a releasable rotation stop (74) for axial force transfer between the rotationally fixed part (50; 102) and the rotating part (46; 100), and can be unblocked in order to prevent the said axial force transfer.

**3.** Combination cylinder according to Claim 2, **characterised in that** the thread (52) is not a thread of the self-locking type.

**4.** Combination cylinder according to Claims 2 or 3, **characterised in that** the releasable rotation stop (74) is contained in an emergency release device (76) for the emergency release of the holding brake.

**5.** Combination cylinder according to any of Claims 2 to 4, **characterised by** axial force transfer between the spindle drive (46, 50; 100, 102) and the service brake piston rod (22).

**6.** Combination cylinder according to any of Claims 2 to 5, **characterised in that** on the thrust ring (50) two gears (44) eccentric relative to the central axis (32) are provided in such manner that torques around an axis perpendicular to the central axis (32) are compensated.

**7.** Combination cylinder according to any of Claims 2 to 6, **characterised in that** the thrust ring (50) and the rotationally fixed part (46, 50) of the spindle drive are combined and the rotation stop (74) is arranged between the thrust ring (50) and the rotating part (46) of the spindle drive (46, 50).

**8.** Combination cylinder according to Claim 7, **characterised in that** on the thrust ring (50) is formed at least one pivot pin (58) arranged perpendicularly to the central axis (32) of the combination cylinder (12), on which at least one angle lever (54) is mounted to pivot, the said lever at one end being articulated to the spring brake piston (36) and at the other end being supported on a fixed supporting surface (56) of the combination cylinder (12), in such manner that when the spring brake piston (36) is actuated in a holding brake situation, a rotation of the supported angle lever (54) about the pivot pin (58) and hence an actuation of the thrust ring (50) in the same direction take place.

**9.** Combination cylinder according to Claim 8, **charac-**

**terised in that** two pivot pins (58) of the thrust ring (50), in themselves perpendicular to the central axis 32) of the combination cylinder (12) and extending outwards, are provided with angle levers (54) mounted to pivot on them, which in relation to a plane that contains the central axis (32) of the combination cylinder (12), are arranged reversed relative to one another.

10. Combination cylinder according to Claim 9, **characterised in that** a lever arm (60) of the angle lever (54) is connected by means of a doubly articulated tension strip (64) to the spring brake piston (36).

11. Combination cylinder according to Claim 9, **characterised in that** another lever arm (62) of the angle lever (54) is supported on the fixed supporting surface (56) by a supporting roller (66) that can roll.

12. Combination cylinder according to Claim 11, **characterised in that** the pivot pins (58) of the thrust ring (50) carry at their ends slide elements (68) which are guided in slideways extending in the direction of the central axis (32) of the combination cylinder (12).

13. Combination cylinder according to Claim 12, **characterised in that** the supporting surface (56) for the angle lever (54) is formed on a partition wall (40) between the spring brake cylinder (30) and the service brake cylinder (18).

14. Combination cylinder according to Claim 13, **characterised in that** the partition wall (40) forms a supporting surface for the at least one spring (34) of the spring brake cylinder (30).

15. Combination cylinder according to any of Claims 2 to 14, **characterised in that** the rotation stop (74) comprises a manually actuated pawl (80) that can engage in outer teeth (82) of the rotating part (100) of the spindle drive (100, 102), which is mounted and can rotate on the thrust ring (50).

16. Combination cylinder according to any of Claims 2 to 6, **characterised in that** at least one wedge contour parallel to the central axis (32) of the combination cylinder (12) can be actuated by the spring brake piston (36), along which a lever arm (88) of at least one lever (90) mounted to rotate on the combination cylinder (12) can be guided, the other arm (92) of the said lever being supported on the thrust ring (50), such that guiding the one lever arm (88) of the lever (90) along the wedge contour (86) brings about a rotation movement of the lever ((90) about a lever pivoting axis (94) and hence an axial force on the thrust ring (50), which is directed in the same direction as the movement of the spring brake cylinder (36).

17. Combination cylinder according to Claim 16, **characterised in that** the lever pivoting axis (94) of the lever (90) is arranged perpendicularly to the central axis (32) of the combination cylinder (12).

18. Combination cylinder according to Claims 16 or 17, **characterised in that** two wedge contours (86) which at least partially surround the thrust ring (50) as viewed in the direction of the lever pivoting axis (94) of the lever (90) are provided, which co-operate with two levers which are symmetrical relative to the central axis (32) of the combination cylinder (12) and are combined into a double lever (90).

19. Combination cylinder according to either of Claims 16 to 18, **characterised in that** the thrust ring (50) transfers the axial force via an axial thrust bearing (98) to a gearwheel (100) which forms the rotating part of the spindle drive (100, 102), in the teeth (82) of which a pawl (80) of the rotation stop (74) that can be actuated manually can engage, the said gearwheel (100) being mounted to rotate on a rotationally fixed part (102) of the spindle drive (100, 102) by means of the thread (52) which transfers the axial force to the service brake piston rod (22).

20. Combination cylinder according to any of Claims 2 to 6, **characterised in that** a rocker arm mechanism comprising at least one roller strip (112) articulated to the thrust ring (50) with at least one rocker arm guide is provided, in which at least one rocker arm (108) is guided, which is articulated on the one hand to the housing (14) of the combination cylinder (12) and on the other hand to at least one tension strip (110) articulated to the spring brake cylinder (36).

21. Combination cylinder according to Claim 20, **characterised in that** at its end facing away from the thrust ring (50) the roller strip (112) is provided with a rotating supporting roller (114), which can roll on a rocker arm surface (116) of the rocker arm (108).

22. Combination cylinder according to Claims 20 or 21, **characterised in that** the thrust ring (50) is mounted in the housing (14) of the combination cylinder (12) by at least one sliding guide (68) and is unable to rotate.

23. Combination cylinder according to any of Claims 20 to 22, **characterised in that** two roller strips (112) with rocker arm guides, two rocker arms (108) guided in the rocker arm guides and two tension strips (110) are provided, which are arranged reversed relative to one another in relation to a plane that contains the central axis (32) of the combination cylinder (12).

24. Combination cylinder according to Claim 23, **characterised in that** the thrust ring (50) has two pivot pins (58) arranged perpendicularly to the central axis (32), each of which carries a bearing for a roller strip (112).

25. Brake calliper unit (1) of a disc brake of a railway vehicle, containing at least one combination cylinder (12) according to any of the preceding claims.

**Revendications**

1. Cylindre (12) combiné dans un cylindre (18) de frein de service, comme frein de service actif, ayant au moins un piston (20) de frein de service pouvant être actionné par un fluide sous pression et actionnant un mécanisme (1) de frein par l'intermédiaire d'une tige (22) de piston de frein de service, ainsi qu'un cylindre (30) de frein à ressort accumulateur comme frein de stationnement passif, ayant un piston (36) de frein de ressort accumulateur actionné par un fluide sous pression, à l'encontre de l'action d'au moins un ressort (34) accumulateur, le piston (36) de frein à ressort accumulateur transmettant, dans le cas d'un frein de stationnement, la force du au moins un ressort (34) accumulateur, à l'aide d'une transmission (44) démultipliant la force, à la tige (22) de piston de frein de service, **caractérisé en ce que** la transmission (44) est telle que les déplacements du piston (36) de frein de ressort accumulateur et de la tige (22) de piston de frein de service sont coaxiaux et la démultiplication de force est plus grande au fur et à mesure que la course du piston (36) de frein de ressort accumulateur augmente.

2. Cylindre combiné suivant la revendication 1, **caractérisé en ce qu'**il est prévu un cône (50) de serrage, monté fixe en rotation, pouvant être actionné coaxialement à un axe (32) médian du cylindre (12) combiné et appliquant des forces axiales à un actionnement (46, 50 ; 100, 102) à broche, dont une partie (50 ; 102) est fixe en rotation et dont une partie (46 ; 100) est montée tournante coaxialement à l'axe médian, le mouvement de rotation de la partie (46 ; 100) tournante de l'actionnement (46, 50 ; 100, 102) à broche pouvant être bloqué au moyen d'un blocage (74) en rotation pouvant être débloqué, pour la transmission de force axiale entre la partie (50 ; 102) fixe en rotation et la partie (46 ; 100) tournante et pouvant être débloqué pour faire cesser cette transmission de force axiale.

3. Cylindre combiné suivant la revendication 2, **caractérisé en ce que** le filetage (52) est un filetage qui n'est pas autobloquant.

4. Cylindre combiné suivant la revendication 2 ou 3, **caractérisé en ce que** le blocage (74) en rotation, auquel il peut être mis fin, est entouré d'un dispositif (76) de desserrage d'urgence pour le desserrage d'urgence du frein de stationnement.

5. Cylindre combiné suivant l'une des revendications 2 à 4, **caractérisé par** une transmission de force axiale entre l'actionnement (46, 50 ; 100, 102) à broche et la tige (22) de piston de frein de service.

6. Cylindre combiné suivant l'une des revendications 2 à 5, **caractérisé en ce qu'**il est prévu sur le cône (50) de serrage, deux transmissions (44) excentrées par rapport à l'axe (32) médian, de manière à compenser des couples de rotation autour d'un axe perpendiculaire à l'axe (32) médian.

7. Cylindre combiné suivant l'une des revendications 2 à 6, **caractérisé en ce que** le cône (50) de serrage et la partie fixe en rotation de l'actionnement (46, 50) à broche sont réunis et le blocage (74) en rotation est disposé entre le cône (50) de serrage et la partie (46) tournante de l'actionnement (46, 50) à broche.

8. Cylindre combiné suivant la revendication 7, **caractérisé en ce que**, sur le cône (50) de serrage, est formé au moins un tourillon (58) qui est disposé perpendiculairement à l'axe (32) médian du cylindre (12) combiné et sur lequel est monté au moins un levier (54) coudé, qui est articulé par l'une de ses extrémités au piston (56) de frein à ressort accumulateur et par son autre extrémité est appuyé à une surface (56) fixe d'appui du cylindre (12) combiné, de manière à ce que, lors d'un actionnement du piston (36) de frein à ressort accumulateur, dans le cas du freinage d'arrêt, une rotation du levier (54) coudé soutenu autour du tourillon (58) et ainsi un actionnement de même sens de l'anneau (50) de serrage soit déclenché.

9. Cylindre combiné suivant la revendication 8, **caractérisé en ce qu'**il est prévu deux leviers (54) coudés, montés tournant sur des tourillons (58) du cône (50) de serrage, s'étendant vers l'extérieur perpendiculairement à l'axe (32) médian du cylindre (12) combiné, ces leviers étant disposés de manière inversée l'un par rapport à l'autre par rapport à un plan passant par l'axe (32) médian du cylindre (12) combiné.

10. Cylindre combiné suivant la revendication 9, **caractérisé en ce qu'**un bras (60) du levier (54) coudé est relié au piston (36) de frein à ressort accumulateur au moyen d'un collier (64) de traction doublement articulé.

11. Cylindre combiné suivant la revendication 9 ou 10, **caractérisé en ce qu'**un autre bras (62) du levier (54) coudé est appuyé au moyen d'un galet (66) d'appui pouvant rouler sur la surface (56) fixe d'appui.

**12.** Cylindre combiné suivant la revendication 11, **caractérisé en ce que** les tourillons (58) du cône (50) de serrage portent du côté de l'extrémité des patins (68), qui sont guidés d'une manière fixe en rotation dans des coulisses s'étendant en direction de l'axe (32) médian du cylindre (1) combiné.

**13.** Cylindre combiné suivant la revendication 12, **caractérisé en ce que** la surface (56) d'appui du levier (54) coudé est formée sur une cloison (40) entre le cylindre (30) de frein à ressort accumulateur et le cylindre (18) de frein de service.

**14.** Cylindre combiné suivant la revendication 13, **caractérisé en ce que** la cloison (40) forme une surface d'appui pour le au moins un ressort (34) accumulateur du cylindre (30) de frein à ressort accumulateur.

**15.** Cylindre combiné suivant l'une des revendications 2 à 14, **caractérisé en ce que** le blocage (74) en rotation comporte un cliquet (80) pouvant être actionné à la main et engrenant dans une denture (62) extérieure de la partie (100) tournante de l'actionnement (100, 102) à broche, cliquet qui est monté tournant sur le cône (50) de serrage.

**16.** Cylindre combiné suivant l'une des revendications 2 à 6, **caractérisé en ce que**, par le piston (36) de frein à ressort accumulateur, au moins un contour (86) de coin peut être actionné parallèlement à l'axe (32) médian du cylindre (12) combiné, contour le long duquel peut être guidé un bras (88) d'au moins un levier (90) monté tournant sur le cylindre (12) combiné, dont l'autre bras (90) s'appuie sur le cône (50) de serrage, un guidage de l'un des bras (88) du levier (90) sur le contour (86) de coin, provoquant un mouvement de rotation du levier (90) autour d'un axe (94) de rotation du levier et ainsi, sur le cône (50) de serrage, une force axiale de même sens que le déplacement du cylindre (36) de frein à ressort accumulateur.

**17.** Cylindre combiné suivant la revendication 16, **caractérisé en ce que** l'axe (94) de rotation du levier (90) est perpendiculaire à l'axe (32) médian du cylindre (12) combiné.

**18.** Cylindre combiné suivant la revendication 16 ou 17, **caractérisé en ce qu'**il est prévu deux contours (86) de coin, entourant, au moins en partie, le cône (50) de serrage, vu dans la direction de l'axe (94) de rotation du levier (90), contours qui coopèrent avec deux leviers symétriques par rapport à l'axe (32) médian du cylindre (12) combiné et rassemblé en un levier (90) double.

**19.** Cylindre combiné suivant l'une des revendications 16 à 18, **caractérisé en ce que** le cône (50) de serrage transmet la force axiale par l'intermédiaire d'un palier (98) axial de poussée à une roue (100) dentée qui forme la partie tournante de l'actionnement (100, 102) à broche et dans la denture (82) de laquelle peut pénétrer un cliquet actionnable à la main du blocage en rotation, la roue (100) dentée étant montée tournante sur une partie (102) fixe en rotation de l'actionnement (100, 102) à broche par l'intermédiaire du filetage (52) qui transmet la force axiale à la tige (22) de piston du frein de service.

**20.** Cylindre combiné suivant l'une des revendications 2 à 6, **caractérisé en ce qu'**il est prévu un mécanisme de coulisse comportant au moins un collier (112) à rouleau articulé au cône (50) de serrage et ayant au moins un guidage à coulisse, dans lequel est guidé au moins un levier (108) de coulisse, qui est articulé d'une part au boîtier (14) du cylindre (12) combiné et d'autre part à au moins un collier (110) de traction, articulé au cylindre (36) de frein à ressort accumulateur.

**21.** Cylindre combiné suivant la revendication 20, **caractérisé en ce que** le collier (112) à rouleau est pourvu à son extrémité éloignée du cône (50) de serrage, d'un galet (114) d'appui tournant, qui peut rouler sur une surface (116) de coulisse du levier (108) de coulisse.

**22.** Cylindre combiné suivant la revendication 20 ou 21, **caractérisé en ce que** le cône (50) de serrage est monté par au moins un guidage (68) glissant, sans pouvoir tourner, dans le boîtier (14) du cylindre (1) combiné.

**23.** Cylindre combiné suivant l'une des revendications 20 à 22, **caractérisé en ce qu'**il est prévu deux colliers (112) à rouleau ayant des guidages de coulisse, deux leviers (108) de coulisse guidés dans les guidages à coulisse, ainsi que deux colliers (110) de traction, qui sont disposés en étant inversés l'un par rapport à l'autre, par rapport à un plan passant par l'axe (32) médian du cylindre (12) combiné.

**24.** Cylindre combiné suivant la revendication 23, **caractérisé en ce que** le cône (50) de serrage a deux tourillons (58), qui sont disposés perpendiculairement à l'axe (32) médian et qui portent chacun un palier pour un collier (112) à rouleau.

**25.** Groupe (1) d'étrier de frein d'un frein à disque d'un véhicule ferroviaire comportant au moins un cylindre (12) combiné suivant l'une des revendications précédentes.

FIG.1

FIG.2

FIG.3

FIG.4

FIG.5

EP 2 219 918 B1

Zylinderkraft

Federkraft

Übersetzung i

Zylinderhub

S

FIG.6

FIG.7

FIG.8

FIG. 9

FIG.10

FIG.11

FIG.12

FIG.13

FIG.14

FIG.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0553450 B1